(19) Europäisches Patentamt
European Patent Office
Office européen des brevets

(11) **EP 4 650 507 A1**

(12) **EUROPEAN PATENT APPLICATION**

(43) Date of publication:
**19.11.2025 Bulletin 2025/47**

(21) Application number: **25170418.5**

(22) Date of filing: **14.04.2025**

(51) International Patent Classification (IPC):
***D06F 37/36*** *(2006.01)* ***D06F 37/40*** *(2006.01)*

(52) Cooperative Patent Classification (CPC):
**D06F 37/36;** D06F 37/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.05.2024 KR 20240064679**

(71) Applicant: **LG Electronics Inc.**
**Yeongdeungpo-gu**
**Seoul 07336 (KR)**

(72) Inventors:
• **AHN, Young Chan**
**08592 Seoul (KR)**
• **SONG, Jeongyong**
**08592 Seoul (KR)**
• **LEE, Jung Gu**
**08592 Seoul (KR)**

(74) Representative: **Vossius & Partner**
**Patentanwälte Rechtsanwälte mbB**
**Siebertstrasse 3**
**81675 München (DE)**

(54) **DRUM ROTATING DEVICE FOR LAUNDRY CARE APPARATUS**

(57) Proposed are a drum rotating device (100) and a laundry care apparatus including the same. The drum rotating device includes a drum shaft (80) coupled to the drum (30), and a motor (200) including a stator (220) and a rotor (230) that rotates relative to the stator (220). A gear assembly (300) transmits rotational force of the rotor (230) to the drum shaft (80). A carrier (360) constituting the gear assembly (300) and the drum shaft (80) may be coupled to each other in a first area. A sun gear (340), a ring gear (RG) and pinion gears (370) constituting the gear assembly (300) are engaged with each other and rotate in a second area spaced apart from the first area on the basis of the axial direction of the drum shaft (80).

Fig. 1

EP 4 650 507 A1

**Description**

CROSS REFERENCE TO RELATED APPLICATION

The present application claims priority to Korean Patent Application No. 10-2024-0064679, filed May 17, 2024, the entire contents of which are incorporated herein for all purposes by this reference.

BACKGROUND OF THE INVENTION

Field of the Invention

The present disclosure relates to a drum rotating device and a laundry care apparatus including the same.

Description of the Related Art

In general, a laundry care apparatus refers to an apparatus that washes laundry or dries washed laundry. The laundry care apparatus includes a washing machine and a dryer. Among these, a washing machine can wash laundry through washing, rinsing, and spinning processes to remove dirt from laundry items such as clothing and bedding.

Recently, various types of washing machines are being commercialized. For example, there are a vertical washing machine in which a rotating drum that holds the laundry rotates around a vertical axis, and a drum-type washing machine in which a rotating drum rotates around a horizontal axis or an inclined axis. All of these washing machines are driven by a motor.

A drum-type washing machine can perform a series of laundry processes, including washing, rinsing, and spinning by rotating a drum that holds laundry. In this case, the washing and rinsing processes, in which laundry containing a large amount of water is rotated, require a high-torque rotational force at low speed. On the other hand, the spinning process, in which laundry is rotated so that the laundry contains little water, requires a low-torque rotational force at high speed.

Accordingly, a drum driving device that drives a washing machine needs to provide various rotational forces and rotational speeds depending on a driving mode. To this end, a reducer and a clutch are used in the drum driving device. For example, Korean Patent Application Publication No. 10-2020-0089604 (patent document 1), Korean Patent Application Publication No. 10-2023-0090484 (patent document 2), and Korean Patent No. 10-1920812 (patent document 3) disclose a technology for reducing the speed of a motor by installing a plurality of gears, such as a planetary gear assembly, between the motor and an output shaft. The clutch may control the driving of some gears among the plurality of gears, thereby changing the torque and rotational speed of the output shaft coupled with the rotating shaft of a rotating drum.

However, looking at the structure of the reducer of the above prior patents, a sun gear of the reducer (the planetary gear assembly) has a coupling space formed inside to be coupled to the rotating shaft of the rotating drum. This coupling space makes the sun gear hollow, which in turn increases the diameter of the sun gear. The sun gear with a large diameter has difficulty in increasing a gear ratio thereof, and as a result, the sun gear cannot provide a large torque to the output shaft. Additionally, the sun gear, which has the coupling space formed inside, also has the problem of low durability due to the empty space.

In addition, when a portion of the rotating shaft of the rotating drum enters the inside of the drive area in which the gears of the reducer mesh and rotate, the area of the drive area increases, and as a result, the drum driving device becomes larger. Therefore, it is difficult to miniaturize the drum driving device, and there is a limitation that the drum driving device must be made larger to generate large torque.

Additionally, since the reducer operates while a plurality of components rotate relative to each other, the components need to be supported by bearings to ensure the stable operation of the reducer. For example, a plurality of bearings may be arranged along an axial direction to ensure that components rotate stably without shaking. However, in order for the plurality of bearings to be provided along the axial direction, the axial length of the components must be secured. In order to achieve stable rotational movement, the axial length of the components may be increased, but this increases the axial size of the drum driving device.

In addition, the clutch in the prior patents may operate in conjunction with the reducer to switch the drum driving device between a reduction mode and a constant speed mode. However, in order to switch the drum driving device from the reduction mode to the constant speed mode, the motor must first stop, resulting in a long mode switching time. Of course, the clutch may be operated while the motor is rotating to switch modes, but this causes gears engaging with each other to collide during the switching process, generating vibration and noise.

Additionally, in the prior patents, a clutch driving space is required within the drum driving device for the operation of the clutch. Since the clutch driving space must be provided separately from a space for storing and operating gears, this increases the size of the drum driving device.

Meanwhile, the clutch constituting the drum driving device may be installed inside the drum driving device. A clutch power unit (an actuator) for driving the clutch is also installed inside the drum driving device, but this structure has the problem of increasing the overall volume of the drum driving device.

Documents of Related Art

(Patent Document 1) Korean Patent Application Publication No. 10-2020-0089604
(Patent Document 2) Korean Patent Application Publication No. 10-2023-0090484
(Patent Document 3) Korean Patent No. 10-1920812

SUMMARY OF THE INVENTION

Accordingly, the present disclosure has been made keeping in mind the above problems occurring in the related art, and an objective of the present disclosure is to axially separate an input shaft (a sun gear) and an output shaft (a drum shaft) of a drum rotating device such that the size and shape of the input shaft is not limited by the output shaft.
Another objective of the present disclosure is to separate a coupling area between the output shaft and a gear assembly from a drive area of the gear assembly, thereby eliminating space for accommodating the output shaft within the gear assembly.
Another objective of the present disclosure is to miniaturize the drum rotating device by shortening the axial length of the input shaft, while securing rotational stability between gear parts by arranging a plurality of bearings along the radial direction of the input shaft.
Another objective of the present disclosure is to allow a clutch to have a neutral state between a locked state and a rotating state and to synchronize the clutch in the neutral state with the rotation of a rotor, thereby enabling mode switching without stopping a motor.
Another objective of the present disclosure is to distribute the stroke of the clutch between the coupling area of the output shaft and the drive area of the gears, thereby ensuring the sufficiently long stroke of the clutch within the limited space of a driving device.
Another objective of the present disclosure is to dispose a drive module for driving the clutch radially outside the rotor.
In order to achieve the objectives of the present disclosure, according to the characteristics of the present disclosure, a drum rotating device of the present disclosure may include a drum shaft coupled to a drum, a motor including a stator and a rotor that rotates relative to the stator. A gear assembly may transmit rotational force of the rotor to the drum shaft. A clutch may move the axial direction of the drum shaft and adjust shifting of the gear assembly. The gear assembly may include a sun gear connected to the rotor, and a carrier that rotates together with the drum shaft. A ring gear may surround the sun gear and may be engaged with the clutch to rotate together with the clutch. Pinion gears may be engaged with each of the sun gear and the ring gear and be rotatably supported by the carrier.
In this case, the carrier and the drum shaft may be coupled to each other in a first area. The sun gear, the ring gear, and the pinion gears may be engaged with each other and rotate in the second area spaced apart from the first area on the basis of the axial direction. Accordingly, since an output shaft (the drum shaft) and an input shaft (the sun gear) are arranged in different areas separated from each other, the output shaft and the input shaft may not be directly connected to each other, and the input shaft may be designed independently regardless of the size or position of the output shaft.
In addition, the sun gear and the drum shaft may be spaced apart from each other in the axial direction of the drum shaft. In this case, by reducing the diameter of the sun gear (the input shaft), the reduction ratio of the gear assembly (a reducer) may be increased, and as a result, the driving efficiency of the drum rotating device may be improved.
Additionally, a movement section of the clutch may be distributed between the first area and the second area.
In addition, the sun gear and the drum shaft may be disposed on opposite sides of the carrier with the carrier placed therebetween. Accordingly, when the reduction ratio of the gear assembly (the reducer) is increased by decreasing the diameter of the sun gear (the input shaft), the size of the drum rotating device may be relatively smaller to provide the same torque.
Additionally, the carrier may be provided with an output part coupled to the drum shaft. The output part and the sun gear may protrude in opposite directions along the axial direction.
In addition, the sun gear, the ring gear, the pinion gears, the clutch, the stator, and the rotor may be arranged to overlap each other in a radial direction of the gear assembly. This may allow the axial length of the drum rotating device to be reduced.
Additionally, the sun gear, the ring gear, the pinion gears, and the clutch may overlap each other in the radial direction of the gear assembly in the second area.

In addition, the rotor may be provided with a coupling unit that is coupled to the sun gear and rotates together with the sun gear. A portion of the ring gear may be disposed between the coupling unit and the sun gear on the basis of a radial direction of the sun gear.

Additionally, a first support bearing may be disposed between an inner circumferential surface of a portion of the ring gear and the sun gear. A second support bearing may be disposed between an outer circumferential surface of a portion of the ring gear and the coupling unit. The first support bearing and the second support bearing may be disposed to overlap each other along the radial direction of the sun gear.

In addition, the sun gear, the ring gear, the pinion gears, the clutch, the stator, and the rotor may each be arranged on a rotation part arrangement line extending in the radial direction of the sun gear. The rotation part arrangement line may be formed between a boundary part between the first area and the second area and a bearing arrangement line that radially connects the first support bearing and the second support bearing.

Additionally, the clutch may move relative to the ring gear along the axial direction while the clutch is engaged with the ring gear.

In addition, the sun gear may include a sun gear body having a cylindrical shape and a rotor connection part provided on an outer circumferential surface of the sun gear body and connected to the rotor. The sun gear may further include a transmission gear part that is spaced apart from the rotor connection part along the axial direction of the sun gear, is provided on the outer circumferential surface of the sun gear body, and is engaged with the pinion gears.

Additionally, one end of the drum shaft may be provided with a shaft coupling part that is coupled to the output part of the carrier. The diameter of the sun gear may be smaller than the diameter of the shaft coupling part.

In addition, a supporter may be disposed at a position spaced apart from the rotor along the axial direction. The clutch may move rectilinearly between the supporter and the rotor and be connected to the supporter or the rotor.

Additionally, the supporter may be disposed at a position spaced apart from the rotor along the axial direction. In this case, the clutch may include a locked state in which the clutch is connected to the supporter and is stopped from rotating, a rotating state in which the clutch is connected to the coupling unit and rotates together with the coupling unit, and a neutral state in which the clutch is spaced apart from the supporter and the coupling unit.

In addition, when locking protrusions of the clutch are engaged with locking parts of the supporter, the locked state may be achieved. When a clutch gear of the clutch is engaged with a coupling gear of the coupling unit provided in the rotor, the rotating state may be achieved. The inner circumferential surface of the clutch and the outer circumferential surface of the ring gear may be respectively provided with sliding teeth and guide teeth that are engaged with each other, so that the clutch and the ring gear may rotate together or be locked together.

Additionally, the clutch may be switched from the locked state to the rotating state via the neutral state. A synchronization mode may be implemented in which the rotational speed of the clutch is synchronized with the rotational speed of the rotor in the neutral state. In this case, the synchronization mode may include a first synchronization mode in which the rotor rotates without gear shifting and the clutch is moved to be released from the locked state, and a second synchronization mode in which the rotor is decelerated and the clutch is accelerated in conjunction with the deceleration of the rotor.

In addition, the ring gear may include an internal gear part engaged with the pinion gears, and a ring housing part that is coupled to the internal gear part to rotate together with the internal gear part. The ring housing part may form an operation space surrounding the internal gear part and the pinion gears. In this case, the clutch may be engaged with guide teeth provided on an outer circumferential surface of the ring housing part.

Additionally, the ring housing part may include a guide plate that is provided with the guide teeth and guides the axial movement of the clutch, and a base plate connected orthogonally to the guide plate and facing a surface of the rotor. In this case, the base plate may be provided with a rotation support part extending axially. The rotation support part may be disposed between the coupling unit of the rotor and the sun gear on the basis of the radial direction of the sun gear.

In addition, the rotation support part and the coupling unit may protrude in opposing directions on the basis of the axial direction. A bearing may be disposed between the rotation support part and the coupling unit.

Furthermore, the clutch may be driven by an actuator. The actuator may include a drive module and a clutch lever that is operated by the drive module and moves the clutch along the axial direction. In this case, the drive module may be disposed radially outward of the rotor.

In addition, the clutch may be operated by the drive module. The drive module may be disposed to be axially and radially spaced apart from the rotor.

Additionally, the drive module may be disposed closer to the drum than to the rotor in the axial direction.

In addition, the sun gear and the drum shaft may be spaced apart from each other in the axial direction of the drum shaft.

Additionally, the sun gear, the ring gear, the pinion gears, and the clutch may have an overlapping area formed by overlapping each other in the radial direction of the gear assembly. In this case, the output part of the carrier connected to the drum shaft may be disposed at a position outside the overlapping area.

The drum rotating device of present disclosure as described above and a laundry care apparatus including the same may have the following effects.

In the present disclosure, the drum shaft, which is the output shaft of the drum rotating device, may be coupled to the carrier in the first area. In addition, the input shaft (the sun gear), the ring gear, and the pinion gears, which reduce the rotation of the rotor, may be engaged with each other and operate in the second area, which is spaced apart from the first area in the axial direction. Accordingly, since the output shaft and the input shaft are disposed in different areas separated from each other, the output shaft and the input shaft may not be directly connected to each other, and the input shaft may be designed independently regardless of the size or position of the output shaft. Accordingly, by reducing the diameter of the input shaft, the reduction ratio of the reducer (the gear assembly) may be increased, and as a result, the driving efficiency of the drum rotating device may be improved.

In particular, when the reduction ratio of the reducer is increased by reducing the diameter of the input shaft, the size of the drum rotating device may be relatively smaller to provide the same torque. Accordingly, the drum rotating device may be miniaturized and the storage space of the drum may be made larger.

In addition, in the present disclosure, the input shaft (the sun gear) and the output shaft (the drum shaft) may be axially separated. The input shaft separated from the output shaft in this way is not required to machine a hollow shape inside, so the durability of the input shaft may be improved.

Additionally, in the present disclosure, the input shaft (the sun gear), the ring gear, the pinion gears, and the clutch may be arranged to overlap each other in the radial direction of the input shaft. When the components are overlapped radially in this way, the input shaft may not need to pass axially through a plurality of components to be coupled to the rotor. Accordingly, the axial length of the input shaft may be relatively short, and the axial length of the drum rotating device may be reduced, thereby miniaturizing components.

In this case, when the input shaft is formed short, the alignment of the input shaft may be improved. In addition, the rotation support part, which is a portion of the ring gear, may be disposed between the input shaft and the coupling unit of the rotor, thereby enabling alignment and support therebetween. Therefore, the input shaft may rotate stably and increase operational reliability.

In particular, the first support bearing and the second support bearing may be respectively arranged between the input shaft and the rotation support part, and between the rotation support part and the coupling unit of the rotor. The first support bearing and the second support bearing may be arranged to overlap each other in the radial direction of the input shaft. Accordingly, the components of the drum rotating device, including the input shaft, may be rotatably supported at a plurality of points along the radial direction, so that the axial length of the device may be shortened while ensuring operational reliability.

In addition, in the present disclosure, the clutch may be switched between the locked state (a high gear ratio mode) and the rotating state (a low gear ratio mode) while moving rectilinearly along the surface of the ring gear. In this case, the clutch may have the neutral state between the locked state and the rotating state. As the rotational speed of the clutch in the neutral state gradually increases, the rotation of the clutch may be synchronized with the rotation of the rotor. The clutch, which is synchronized with the rotor in speed, may be naturally engaged with the rotor without significant impact or noise, and mode switching is possible without stopping the motor. Accordingly, the mode conversion speed of the drum rotating device may be improved, and stability during mode conversion may also be improved.

Additionally, in the present disclosure, the travel range of the clutch may include both the coupling area the first area) of the output shaft and the drive area (the second area) of components including the input shaft. When the stroke of the clutch is distributed over a plurality of areas, the stroke of the clutch may be long. In this case, the sufficiently long travel distance of the clutch may be secured even in the limited internal space of the driving device, and this allows the clutch to maintain the neutral state for a long time during the mode switching process. Accordingly, sufficient time and distance may be secured for the clutch to be synchronized with the speed of the rotor, and the stable mode switching of the clutch may be implemented.

In addition, according to the present disclosure, the diameter of the input shaft (the sun gear) may be relatively smaller, and thus the overall diameter of the drum rotating device may also be reduced. In this case, relatively wide mounting areas may be formed on the radially outer side of the drum rotating device. Therefore, the drive module of the clutch for driving the clutch may be disposed radially outside the rotor, and the diameter of the rotor may be prevented from increasing due to the drive module of the clutch.

In addition, when the drive module of the clutch is disposed at a position radially outward from the rotor, not only may the installation of the drive module of the clutch be easier, but access to wire harnesses for supplying electrical signals and power to the drive module of the clutch may be made easier. Therefore, the assemblability and maintainability of the drum rotating device may also be improved.

In addition, in the present disclosure, the clutch may move rectilinearly along the ring gear. Accordingly, compared to a driving method in which the clutch rotates, the driving space of the clutch for driving the clutch may be made relatively small, which is advantageous in miniaturizing the device.

In particular, in the present disclosure, the clutch may be disposed at a plurality of points along a straight path, so the clutch may have not only the locked state and the rotating state, but also the neutral state therebetween. Accordingly, there is also an effect in which the driving of the clutch and the drum rotating device linked thereto can be controlled more precisely.

Additionally, according to the present disclosure, by reducing the diameter of the input shaft (the sun gear), a large gear ratio may be achieved, thereby reducing the size of the motor. When the size of the motor decreases, the size of the stator of the motor may also decrease, and as a result, the rigidity of the stator may increase. Accordingly, the structure of the drum rotating device may be simplified by reducing a structure to support the stator, thereby reducing manufacturing costs.

In addition, in the present disclosure, the clutch may be connected to the rotor with the speeds of the clutch and the rotor being synchronized. In this case, the synchronization mode may include the first synchronization mode in which the clutch is released from the locked state, and the second synchronization mode in which the clutch is accelerated while the rotor is decelerated. Through this step-by-step synchronization mode, the clutch may rotate at the same speed as the rotor, thereby reducing vibration and noise generated when the clutch is coupled to the rotor.

BRIEF DESCRIPTION OF THE DRAWINGS

The above and other objectives, features, and other advantages of the present disclosure will be more clearly understood from the following detailed description when taken in conjunction with the accompanying drawings, in which:

FIG. 1 is a perspective view showing the structure of a laundry care apparatus to which a drum rotating device is applied according to an embodiment of the present disclosure;
FIG. 2 is a perspective view showing the structures of a casing and a tub constituting the laundry care apparatus according to an embodiment of the present disclosure;
FIG. 3 is a perspective view showing the drum rotating device according to an embodiment of the present disclosure;
FIG. 4 is a cross-sectional view taken along line IV-IV' of FIG. 3;
FIG. 5 is a cross-sectional view showing a state in which the drum rotating device and a drum shaft are coupled to each other according to an embodiment of the present disclosure;
FIG. 6 is a cross-sectional view taken along line VI-VI' of FIG. 3;
FIG. 7 is a cross-sectional view showing a state in which the drum rotating device and the drum shaft are coupled to each other according to an embodiment of the present disclosure;
FIG. 8 is an enlarged cross-sectional view of the drum rotating device according to an embodiment of the present disclosure;
FIG. 9 is an exploded perspective view of components constituting the drum rotating device according to an embodiment of the present disclosure;
FIG. 10 is an exploded perspective view of the components constituting the drum rotating device, taken from a different angle than FIG. 9, according to an embodiment of the present disclosure;
FIG. 11 is a perspective view showing the structures of a rotor, a gear assembly, a clutch, and the drum shaft constituting the drum rotating device according to an embodiment of the present disclosure;
FIG. 12 is a perspective view showing the structures of the gear assembly, the clutch, and the drum shaft constituting the drum rotating device according to an embodiment of the present disclosure;
FIG. 13 shows a cross-sectional view of the clutch in a locked state and a conceptual diagram showing the rotational direction of the gear assembly, in which the clutch and the gear assembly constitute the drum rotating device according to an embodiment of the present disclosure;
FIG. 14 shows a cross-sectional view of the clutch in a rotating state and a conceptual diagram showing the rotational direction of the gear assembly, in which the clutch and the gear assembly constitute the drum rotating device according to an embodiment of the present disclosure;
FIG. 15 is a cross-sectional view of the clutch constituting the drum rotating device in the locked state according to an embodiment of the present disclosure;
FIG. 16 is a cross-sectional view of the clutch constituting the drum rotating device in a neutral state according to an embodiment of the present disclosure;
FIG. 17 is a cross-sectional view of the clutch constituting the drum rotating device in the rotating state according to an embodiment of the present disclosure;
FIG. 18 is a graph showing the rotational speed of each component when the drum rotating device is a washing mode according to an embodiment of the present disclosure;
FIG. 19 is a graph showing the rotational speed of each component when the drum rotating device is in a spin-drying mode according to an embodiment of the present disclosure;
FIG. 20 is a graph showing the positional change of the clutch constituting the drum rotating device according to an embodiment of the present disclosure and the rotational speeds of a motor/a drum/the clutch accordingly;
FIGS. 21 and 22 are conceptual diagrams sequentially showing the rotating states of the gear assembly constituting the drum rotating device of the present disclosure in the process of a synchronization mode;

FIG. 23 is a graph showing change in a current applied to the drum rotating device according to an embodiment of the present disclosure and changes in speeds of the rotor/the drum accordingly;

FIG. 24 is a graph comparing the level of noise generated when the drum rotating device according to an embodiment of the present disclosure switches from the washing mode to the spin-drying mode with that of the prior art;

FIG. 25 is a cross-sectional view showing the internal structure of the drum rotating device according to an embodiment of the present disclosure;

FIG. 26 is a cross-sectional view showing the drum rotating device mounted on the tub according to an embodiment of the present disclosure;

FIG. 27 is an enlarged cross-sectional view of the drum rotating device according to an embodiment of the present disclosure;

FIG. 28 is a plan view showing the structures of a stator and the gear assembly constituting the drum rotating device according to an embodiment of the present disclosure;

FIG. 29 is a perspective view showing the structures of the rotor and the clutch constituting the drum rotating device according to an embodiment of the present disclosure;

FIG. 30 is a perspective view showing the structure of the clutch constituting the drum rotating device according to an embodiment of the present disclosure;

FIG. 31 is a perspective view showing the structures of the clutch and a coupling unit constituting the drum rotating device according to an embodiment of the present disclosure;

FIGS. 32A and 32B are perspective views showing the states of the clutch and the coupling unit before and after the clutch and the coupling unit constituting the drum rotating device are engaged with each other according to an embodiment of the present disclosure;

FIG. 33 is a perspective view of a clutch constituting the drum rotating device according to another embodiment of the present disclosure;

FIG. 34 is a perspective view showing a combined state of a ring gear, a clutch, and an actuator constituting the drum rotating device according to an embodiment of the present disclosure;

FIG. 35 is an exploded perspective view of components of the actuator constituting the drum rotating device according to an embodiment of the present disclosure;

FIG. 36 is a cross-sectional view showing a state in which the clutch is locked by the actuator constituting the drum rotating device according to an embodiment of the present disclosure; and

FIG. 37 is a cross-sectional view showing a state in which the clutch is rotated by the actuator constituting the drum rotating device according to an embodiment of the present disclosure.

## DETAILED DESCRIPTION OF THE INVENTION

Hereinafter, some embodiments of the present disclosure are described in detail with exemplary drawings. When giving reference numerals to components in each drawing, it should be noted that identical components are given the same reference numerals as much as possible even if they are shown in different drawings. In addition, when explaining the embodiments of the present disclosure, if a detailed description of the related known configuration or function is determined to hinder understanding of the embodiments of the present disclosure, detailed description thereof is omitted.

The present disclosure relates to a drum rotating device 100 and a laundry care apparatus including the same. Here, the laundry care apparatus refers to a home appliance such as a washing machine or dryer in which a drum 30 rotates. The laundry care apparatus may include a home appliance capable of both washing and drying. Hereinafter, the laundry care apparatus will be described with a washing machine as an example.

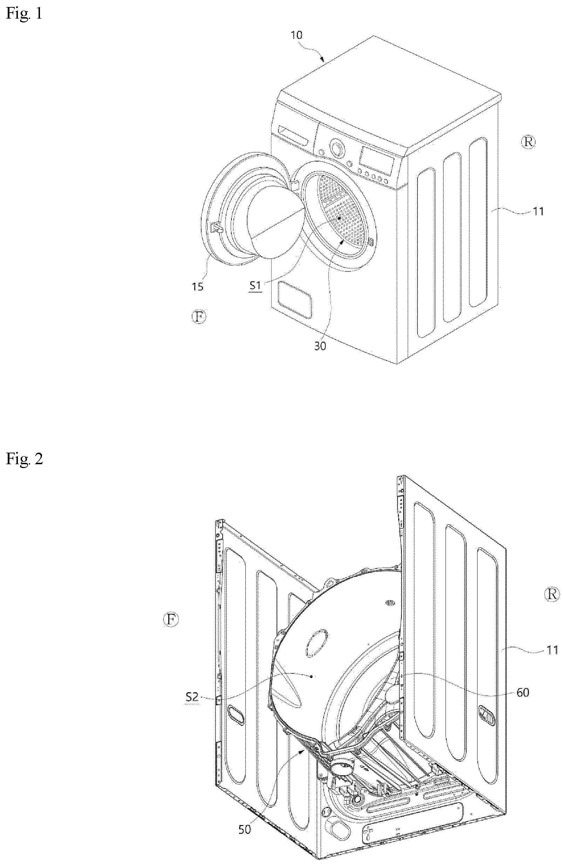

FIG. 1 illustrates a washing machine which is the laundry care apparatus to which the drum rotating device 100 according to the present embodiment is applied. As is seen, the structure of the washing machine may be constituted by a casing 10 which is approximately hexahedral in shape. The casing 10 may include a frame 11 constituting an exterior thereof. A door 15 may be disposed on the front of the casing 10. When the door 15 is opened, a storage space S1 inside the washing machine may be exposed. A user may put laundry into the storage space S1.

For reference, hereinafter, "front" refers to the front of the casing 10 on which the door is disposed, and "rear" refers to the rear of the casing 10, which is opposite to the front. On the basis of FIG. 1, a user may insert laundry to the rear and take the laundry out of the front. In the drawing, reference numeral F indicates a front side, and reference numeral R indicates a rear side.

The storage space S1 may be formed inside the drum 30. The drum 30, which is a rotating body, may have a shape in which the drum 30 surrounds the storage space S1. The drum 30 may be coupled to a spider 60 (see FIG. 2) to be described below. When the spider 60 is rotated by the drum rotating device 100, the drum 30 may also be rotated together.

FIG. 2 illustrates the structures of the frame 11 constituting the structure of the casing 10 and a tub 50. For reference, the drum rotating device 100 is disposed between the rear of the tub 50 and the casing 10, and thus is not visible in FIG. 2. The tub 50 may surround the drum 30. That is, the tub 50 may an outer tub, and the drum 30 may be an inner tub. Reference numeral S2 is a rotation space surrounded by the tub 50, and the drum 30 may be disposed in the rotation space S2. The tub 50 is coupled to the casing 10 so as not to rotate, and the drum 30 may rotate relative to the tub 50.

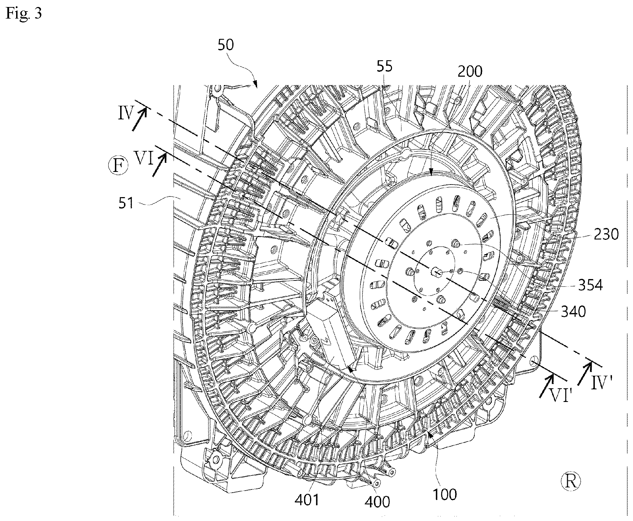

FIG. 3 illustrates the rear structure of the tub 50. For reference, in FIG. 3, the casing 10 shielding the rear surface of the tub 50 is removed, so that the rear of the tub 50 is exposed. A motor 200 of the drum rotating device 100 may be disposed on the center of the rear of the tub 50. The motor 200 may generate rotational force by receiving external power. FIG. 3 illustrates a rotor 230 that constitutes the motor 200, and a stator 220 and a gear assembly 300, which will be described later, are disposed inside the rotor 230.

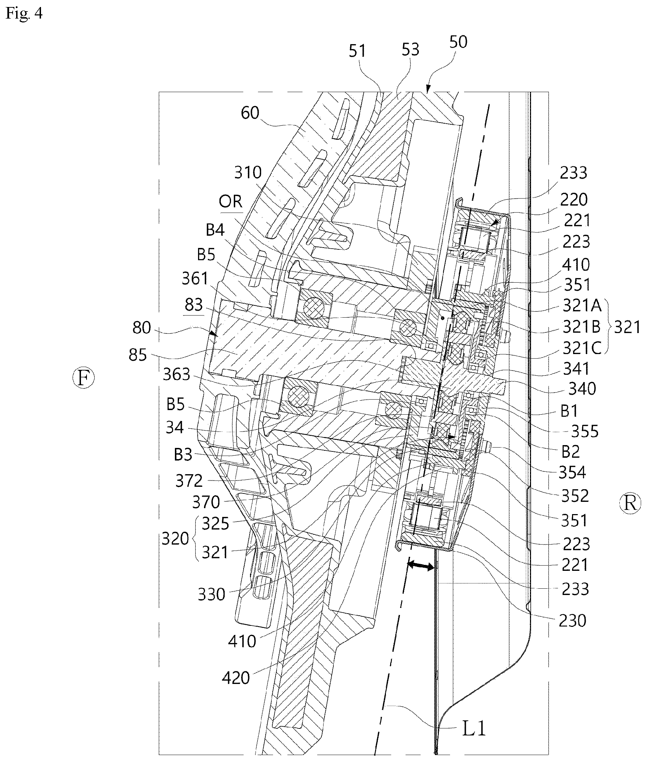

The tub 50 may include a tub body 51 having an approximately cylindrical shape. The front of the tub body 51 may be open and be the entrance to the rotation space S2. The motor 200 may be disposed on the rear surface of the tub body 51. The tub body 51 may have a metal reinforcing material 53 (see FIG. 4) embedded therein to reinforce strength thereof. The reinforcing material 53 may be embedded in the tub body 51 by insert molding.

The rear surface of the tub body 51 may be provided with a rear fence 55. The rear fence 55 may protrude rearward from the rear surface of the tub 50. The rear fence 55 may be approximately ring-shaped. The rear fence 55 may be placed by surrounding the motor 200 and the gear assembly 300. A plurality of reinforcing ribs may be arranged on the circumference of the rear fence 55.

In this embodiment, the rear fence 55 and the motor 200 may be spaced apart from each other, and a predetermined space may be provided therebetween. A drive module 401 constituting an actuator 400, which will be described below, may be disposed in the space. As will be explained below, the gear assembly 300 may be miniaturized, and accordingly the diameter of the motor 200 may also be reduced. When the motor 200 is miniaturized, a gap between the motor 200 and the rear fence 55 may increase, thereby securing a wider space for arranging the drive module 401. Even if the tub 50 including the rear fence 55 is not newly designed/produced but uses an existing design, the motor 200 may be made smaller, so the space for arranging the drive module 401 may be relatively wider.

Referring to FIG. 4, the internal structure of the drum rotating device 100 is illustrated. The drum rotating device 100 may be disposed on the rear surface of the tub body 51, and the spider 60 may be disposed on the front of the drum rotating device 100. The drum rotating device 100 and the spider 60 may be connected to each other by a drum shaft 80. The drum shaft 80, together with an output part 363 of a carrier body 361 to be described below, may constitute an output shaft. Hereinafter, the output shaft refers to a combination of the drum shaft 80 and the output part 363. Hereinafter, an input shaft refers to a sun gear 340.

The carrier body 361, which constitutes a carrier 360, may be a component constituting the gear assembly 300 and rotate together with the drum shaft 80. The carrier body 361 may rotate together with the drum shaft 80 by being coupled thereto. Therefore, the drum shaft 80 may be regarded as being rotated by the carrier body 361.

Looking at the drum shaft 80, the drum shaft 80 may include a shaft body 85 having a cylindrical shape. The gear assembly 300 may be coupled to a first end part of the shaft body 85. More precisely, a shaft coupling recess 83 may be formed in the first end part of the shaft body 85, and the output part 363 of the carrier 360, which will be described later, may be inserted and fixed into the shaft coupling recess 83. The spider 60 may be coupled to a second end part of the shaft body 85. Accordingly, when the rotational force of the rotor 230 is transmitted to the drum shaft 80 through the carrier 360, the spider 60 and the drum 30 may rotate together with the drum shaft 80.

In this case, the interior of the drum rotating device 100 may be divided into a first area and a second area. The first area and the second area may be divided on the basis of an imaginary dividing line L1 passing through a position at which the sun gear 340 and the drum shaft 80 face each other. In FIG. 4, L1 represents the dividing line L1 passing through a part at which the surface of the sun gear 340 and the first end part of the drum shaft 80 face each other. The dividing line L1 may be a direction orthogonal to the axial direction of the drum shaft 80 and extend in the radial direction of the sun gear 340. Here, the first area may be formed at the front side relative to the dividing line L1, and the second area may be formed at the rear side relative to the dividing line L1.

For reference, unless otherwise specified below, "an axial direction" refers to the axial direction of the drum shaft 80, and "engaged" refers to the coupling of the gears in a state in which the gears can interlock with each other.

In this embodiment, a portion of the carrier body 361 constituting the carrier 360 and the output part 363 may be arranged in the first area and may be coupled to the drum shaft 80 in the first area. That is, the carrier 360 and the drum shaft 80 may be coupled to each other in the first area. More precisely, the output part 363 of the carrier body 361 and the first end part of the drum shaft 80 may be coupled to each other in the first area. In the second area, the sun gear 340, a ring gear RG (see FIG. 4), and pinion gears 370 may be engaged with each other and rotate. Accordingly, when the area where the output shaft is combined and arranged and the area where the gears are engaged with each other and rotate are divided, the sun gear 340 may be involved only in the interlocking of the gears regardless of the combination of the output shaft. The sun gear 340 does not need to be hollow for being coupled to the output shaft or have a shape that protrudes in the direction of the drum shaft 80. Accordingly, the diameter of the sun gear 340 may be decreased, and a gear ratio between the sun gear 340 and the ring gear RG may be increased.

Meanwhile, in the present embodiment, the sun gear 340, the ring gear RG, the pinion gears 370, and a clutch 410 may overlap each other in the radial direction of the gear assembly 300 in the second area. Accordingly, the second area may also be called an overlapping area. In this way, when the sun gear 340, the ring gear RG, the pinion gears 370, and the clutch 410 overlap in the radial direction in the second area, the axial length of the drum rotating device 100 may be short, and an axial distance between parts may be short, so that stable shaft alignment may be achieved.

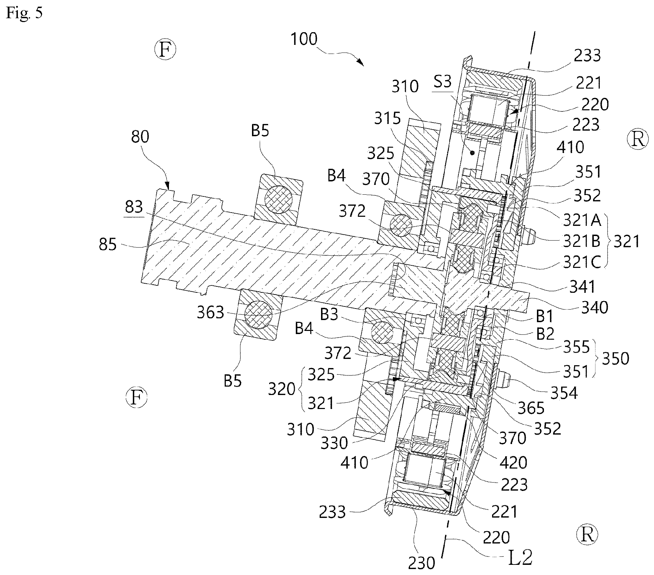

FIG. 5 illustrates the drum rotating device 100 and the drum shaft 80 with the spider 60 and the tub 50 omitted. In this embodiment, the drum rotating device 100 may include a plurality of bearings. The plurality of bearings may be disposed between parts that rotate relative to each other, and serve to assist in the rotation of the parts. As described above, in this embodiment, the sun gear 340 may be separated from the output shaft and be installed and rotated independently. Accordingly, the overall length of the sun gear 340 may be short.

Meanwhile, since the rotor 230 of the motor 200 is coupled to the sun gear 340, the sun gear 340 may align the shaft of the rotor 230. This means that if the length of the sun gear 340 is decreased, an axial length for installing the bearings is also decreased. In this embodiment, the plurality of bearings may be disposed in the radial direction of the sun gear 340 to support rotating parts at a plurality of points between the rotating parts. Specifically, a first support bearing B1 may be disposed between the outer circumferential surface of the sun gear 340 and the inner circumferential surface of a rotation support part 321C, which is a portion of the ring gear RG to be described below. A second support bearing B2 may be disposed between the outer circumferential surface of the rotation support part 321C, which is a portion of the ring gear RG, and a coupling unit 350.

In this case, the first support bearing B1 and the second support bearing B2 may be arranged to overlap each other along the radial direction of the sun gear 340. In FIG. 5, L2, which is an imaginary line extending in the radial direction of the sun gear 340, may pass through each of the first support bearing B1 and the second support bearing B2. When the first support bearing B1 and the second support bearing B2 are arranged radially relative to each other, the axial length may be prevented from increasing even when a plurality of bearings are arranged. In this embodiment, the sun gear 340 may be independent of the output shaft to have the decreased axial length thereof, and may be supported at a plurality of points in the axial direction by the first support bearing B1 and the plurality of pinion gears 370 to be described later, so that stable shaft alignment is possible.

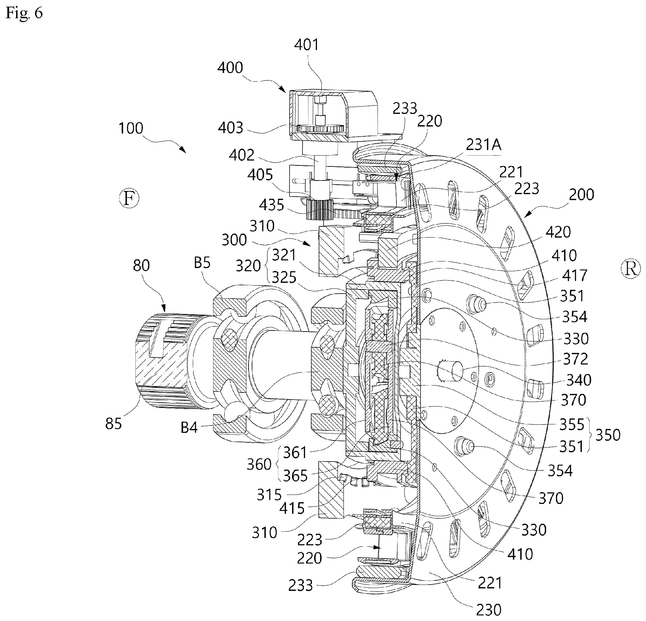

Referring to FIG. 6, the motor 200, the gear assembly 300 arranged inside the motor 200, and the actuator 400 for driving the clutch 410 are illustrated. As illustrated, the gear assembly 300, the clutch 410, and the motor 200 may be arranged to overlap each other in the radial direction of the gear assembly 300. More precisely, the sun gear 340, the ring gear RG, and the pinion gears 370, which constitute the gear assembly 300, the clutch 410, the stator 220, and the rotor 230 may be arranged to overlap each other in the radial direction of the gear assembly 300. Accordingly, the axial length of the drum rotating device 100 may be short.

The actuator 400 that operates the clutch 410 may include the drive module 401. The drive module 401 may be positioned more forward than the motor 200. The drive module 401 of the actuator 400 may be positioned forward from the motor 200, i.e., at a position apart therefrom toward the tub 50. The drive module 401 may be disposed radially outside the motor 200. The drive module 401 may be disposed axially and radially apart from the motor 200, thereby increasing the degree of freedom in installation. In addition, the drive module 401 of the actuator 400 may be disposed outside the motor 200, not inside the motor 200 which is narrow, so the drive module 401 may offer better accessibility and allow for easier connection of wire harnesses, etc.

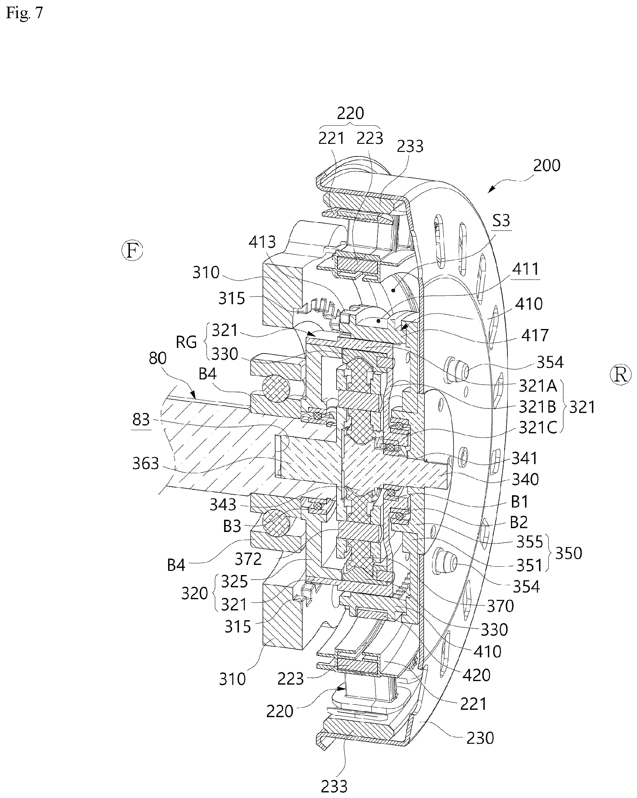

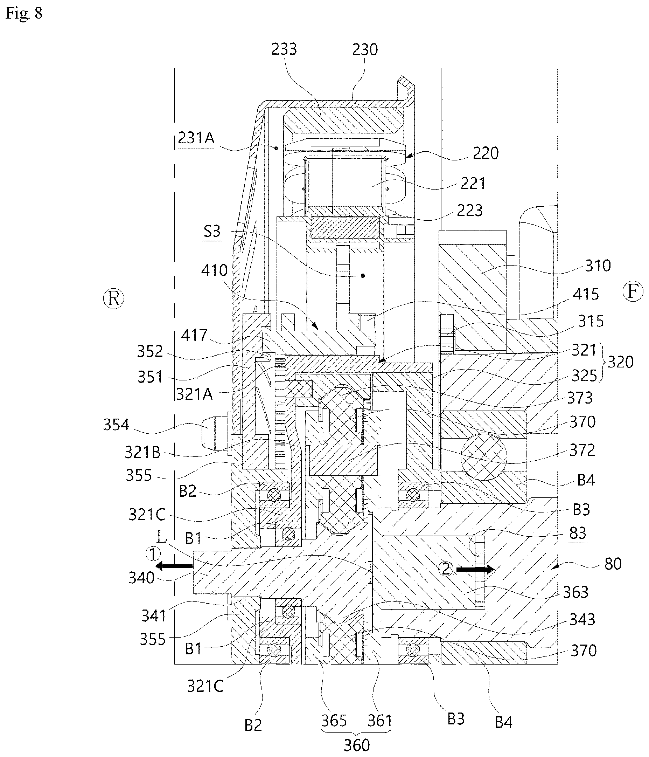

The motor 200 will be described with reference to FIGS. 7 and 8. The motor 200 includes the stator 220, which is fixed, and the rotor 230 that rotates relative to the stator 220. The stator 220 may include a core 223 in which metal plates are laminated, and an insulator 221 surrounding the core 223. The insulator 221 may prevent a current flowing in a coil (not shown) wound around the teeth of the core 223 from being directly transmitted to the core 223. The rotor 230 may have a permanent magnet 233 disposed to face the core 223. For another example, the rotor 230 may be provided with the core 223 and the coil, and the stator 220 may be provided with the permanent magnet 233.

The rotor 230 may surround the stator 220. A driving space S3 may be formed inside the stator 220. The gear assembly 300 may be disposed in the driving space S3. More precisely, the sun gear 340, the pinion gears 370, and the ring gear RG, which constitute the gear assembly 300, may be disposed in the driving space S3. The clutch 410 may also be disposed in the driving space S3. All or part of the output part 363 of the carrier 360 constituting the output shaft may protrude forward, i.e., toward the tub 50, from the driving space S3 surrounded by the rotor 230.

Looking at FIG. 8, which is an enlarged view, the sun gear 340 and the output part 363 of the carrier 360 protrude in opposite directions. The sun gear 340 protrudes rearward (in the direction of arrow ①), and the output part 363 of the carrier 360 protrudes forward (in the direction of arrow ②). More precisely, the sun gear 340 and the output part 363 of the carrier 360 protrude in opposite directions with respect to a boundary L. Accordingly, the sun gear 340 and the output part 363 of the carrier 360 may extend in opposite directions, so that the entire length of the drive shaft of the drum rotating device 100 may be the sum of the axial length of the sun gear 340 and the axial length of the output part 363.

As will be described below, the clutch 410 may be disposed inside the driving space S3. The clutch 410 may be moved axially within the driving space S3. Referring to FIG. 8, the clutch 410 is shown to be engaged with the side surface of a ring housing part 320 constituting the ring gear RG, that is, a guide plate 321A. In particular, in FIG. 8, the clutch 410 is moved rearward (to the left on the basis of the drawing) and is engaged with the coupling unit 350 to be described below. In this state, the clutch 410 may rotate together with the coupling unit 350.

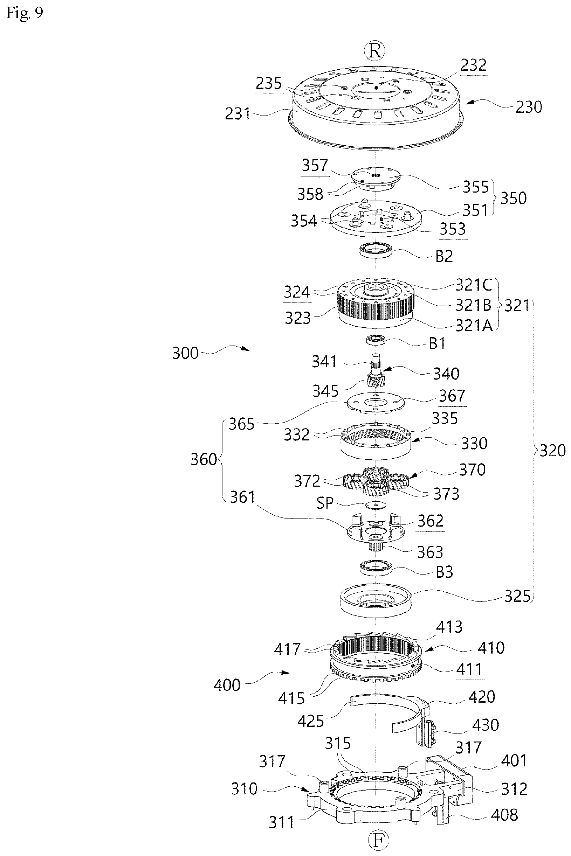

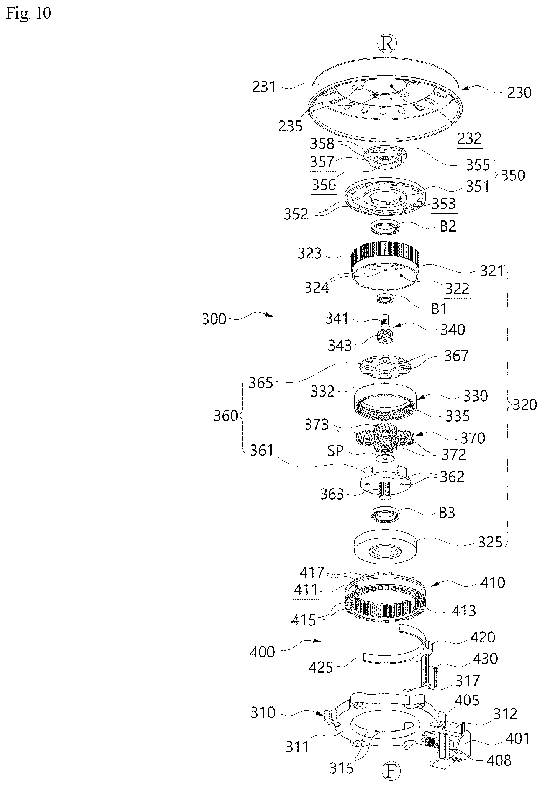

Referring to FIGS. 9 and 10, each component constituting the drum rotating device 100 will be descried. For reference, in FIGS. 9 and 10, the stator 220 is omitted. First, looking at the rotor 230, a rotor body 231 surrounding the stator 220 may constitute the structure of the rotor 230. The rotor body 231 may have a structure including an approximately circular top plate and a side plate extending forward (downward on the basis of FIG. 9) from the top plate. The entire rotor body 231 may be rotated.

A rotor center hole 232 may be formed to be open in the center of the rotor body 231. The coupling unit 350, which will be described later, may be disposed in the rotor center hole 232. The sun gear 340 coupled to the coupling unit 350 may rotate together with the rotor 230. Reference numeral 235 indicates coupling holes into which fixing protrusions 354 of a clutch coupling part 351 constituting the coupling unit 350 are inserted.

The motor 200 may be supported on a supporter 310. The supporter 310 may be fixed to the tub 50, and the motor 200 may be disposed on the supporter 310. The supporter 310 may be fixed on the rear surface of the tub 50. The supporter 310 may have a supporter body 311 having an approximate ring shape. The drum shaft 80 may be arranged inside the supporter body 311 so as to be spaced apart from the supporter body 311. The supporter 310 may be referred to as a stator housing that fixes the stator 220.

The supporter 310 may be provided with locking parts 315. The locking parts 315 may lock the clutch 410. More precisely, when the clutch 410 moves forward, locking protrusions 415 of the clutch 410 may engage with the locking parts 315 of the supporter 310 and be prevented from rotating. To this end, the locking parts 315 may have a continuous sawtooth shape corresponding to that of the locking protrusions 415. As another example, the locking parts 315 may not be continuous, but may be formed as a protrusion structure arranged intermittently in the circumferential direction of the supporter body 311.

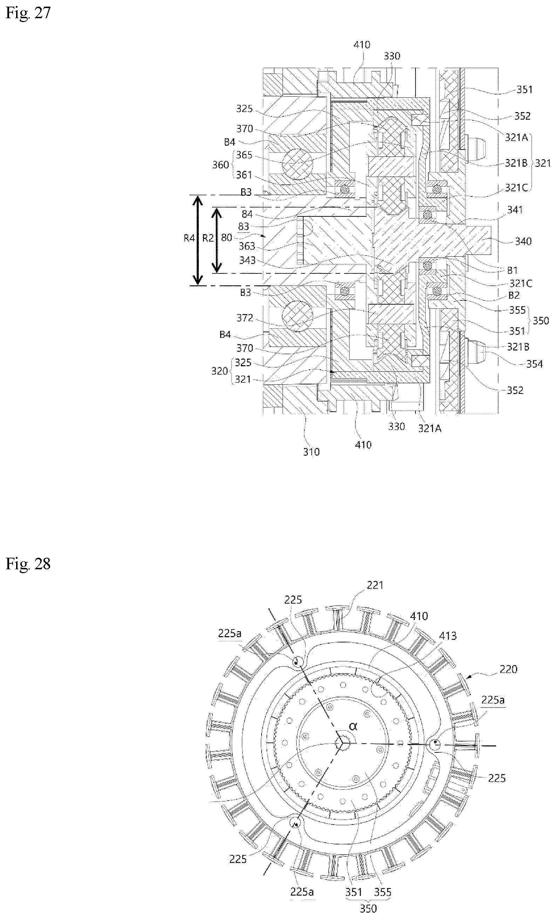

The supporter 310 may be provided with a motor support part 317 supporting the stator 220. The motor support part 317 may have a structure that protrudes rearward in the direction of the motor 200. The motor support part 317 may be inserted into mounting holes 225a (see FIG. 28) of the stator 220, so that the stator 220 may be fixed to the supporter 310.

The drive module 401 of the actuator 400, which will be described later, may be disposed on the supporter 310. The drive module 401 may drive a clutch lever 420 while the drive module 401 is fixed to the supporter 310. The supporter 310 may be provided with a mounting arm 312, and the drive module 401 may be installed on the mounting arm 312. The mounting arm 312 may protrude in a direction orthogonal to the axial direction. For another example, the drive module 401 may be fixed directly to the tub 50, rather than to the mounting arm 312.

Looking at the gear assembly 300 connected to the rotor 230, the gear assembly 300 may include the ring housing part 320, an internal gear part 330, the sun gear 340, the coupling unit 350, the carrier 360, and the pinion gears 370. These may be rotated in conjunction with each other. The linkage structure of the gear assembly 300 will be described in detail below.

The ring housing part 320 and the internal gear part 330 may constitute the ring gear RG. That is, the ring gear RG may include the ring housing part 320 and the internal gear part 330. The internal gear part 330 may be disposed inside the ring housing part 320. The ring housing part 320 and the internal gear part 330 may be coupled to each other and may rotate or stop together. For another example, the ring housing part 320 and the internal gear part 330 may be formed integrally.

The ring housing part 320 may include a first housing 321 and a second housing 325. The first housing 321 and the second housing 325 may be coupled to each other to define a void space inside. More precisely, when the first housing 321 and the second housing 325 are coupled to each other, an inner space 322 may be defined therein. In the inner space 322, the sun gear 340 and the pinion gears 370 may be interact with each other. For another example, the ring housing part 320 may be composed solely of the first housing 321 or the second housing 325.

When the first housing 321 and the second housing 325 are combined with each other, the ring housing part 320 may have an approximately cylindrical shape. The center of the ring housing part 320 may be penetrated along the axial direction. In this embodiment, the sun gear 340 may pass through the center of the first housing 321, and the output part 363 of the carrier 360 may pass through the center of the second housing 325.

Looking at the structure of the first housing 321 with reference to FIG. 9, the first housing 321 may include the guide plate 321A, a base plate 321B, and the rotation support part 321C. The guide plate 321A may have a ring structure constituting the side surface of the first housing 321. The surface of the guide plate 321A may be provided with guide teeth 323. The clutch 410 may be engaged with the guide teeth 323. The inner circumferential surface of the clutch 410 may be provided with sliding teeth 413 engaged with the guide teeth 323. Even though the ring housing part 320 and the sliding teeth 413 are engaged with each other, the ring housing part 320 and the sliding teeth 413 may not be axially fixed to each other, so the clutch 410 may move rectilinearly in the axial direction along the guide plate 321A.

Since the guide teeth 323 and the sliding teeth 413 are engaged with each other, the rotation or stop of the ring gear RG including the ring housing part 320 may be linked to the clutch 410. When the rotation of the clutch 410 is locked, the rotation of the ring gear RG may also be locked and may not rotate. When the clutch 410 rotates, the ring gear RG may also rotate. In this embodiment, a state in which the clutch 410 is fixed to the supporter 310 may be a washing mode or an initial spin-drying mode, and a state in which the clutch 410 rotates together with the rotor 230 may be a spin-drying mode. In addition, a state in which the clutch 410 is separated from each of the supporter 310 and the rotor 230 may be a synchronization mode for transitioning from the initial spin-drying mode to the spin-drying mode. This operation will be described again below.

For reference, in the washing mode and the initial spin-drying mode in which spin-drying begins after washing, weight inside the drum 30 may the weight of laundry plus the weight of water for washing, so the drum rotating device 100 needs to operate at a relatively large torque and slow speed. On the other hand, in the spin-drying mode in which spin-drying is fully performed, weight inside the drum 30 is small due to the lower weight of water, so the drum rotating device 100 needs to operate at a relatively small torque and high speed. In addition, to transition from the initial spin-drying mode to the spin-drying mode, a synchronization mode in which the speed of the clutch 410 is synchronized with the rotational speed of the rotor 230 may be added. The synchronization means that not only the rotational speed but also the rotational direction becomes the same. Hereinafter, the above states are expressed as "the washing mode", "the initial spin-drying mode", "the synchronization mode" and "the spin-drying mode".

The guide plate 321A may be connected to the base plate 321B. The base plate 321B may be a circular plate structure constituting the upper portion of the first housing 321. The base plate 321B may have a plurality of housing coupling holes 324 formed therein. The housing coupling holes 324 may be intended to be coupled to the internal gear part 330, and the internal protrusions 332 of the internal gear part 330 may pass through the housing coupling holes 324. Accordingly, the internal gear part 330 may operate integrally with the ring housing part 320.

The rotation support part 321C may protrude from the base plate 321B. The rotation support part 321C may protrude rearward from the surface of the base plate 321B. The rotation support part 321C may be provided around the center of the base plate 321B formed therethrough. The first support bearing B1 may be in close contact with the inner circumferential surface of the rotation support part 321C, and the second support bearing B2 may be in close contact with the outer circumferential surface of the rotation support part 321C. Referring to FIG. 8, the first support bearing B1 may be arranged between the outer circumferential surface of the sun gear 340 and the inner circumferential surface of the rotation support part 321C. Additionally, the second support bearing B2 may be arranged between the outer circumferential surface of the rotation support part 321C and a sun gear coupling part 355 constituting the coupling unit 350. Accordingly, the rotation support part 321C may be disposed between the coupling unit 350 and the sun gear 340 to maintain axial alignment thereof between the coupling unit 350 and the sun gear 340 and to stably perform relative rotation.

As described below, the sun gear 340 and the coupling unit 350 may rotate integrally, and the ring gear RG may rotate together with the sun gear 340 and the coupling unit 350 (the spin-drying mode), but may stop without rotating together with the sun gear 340 and the coupling unit 350 (the washing mode). Accordingly, the ring gear RG may be stably and rotatably supported between the sun gear 340 and the coupling unit 350 through the rotation support part 321C, which may increase the operational reliability of the drum rotating device 100.

The internal gear part 330 may be made in a ring shape. The internal gear part 330 may be coupled to the ring housing part 320 and may rotate integrally with the ring housing part 320. For this coupling, the internal gear part 330 may be provided with internal protrusions 332 that are coupled to the housing coupling holes 324 of the ring housing part 320. The internal protrusions 332 may protrude axially from the surface of the internal gear part 330.

Referring to FIG. 10, internal gear teeth 335 may be provided on the inner surface of the internal gear part 330. The internal gear teeth 335 may rotate in engagement with pinion gear teeth 373 of the pinion gears 370. The pinion gears 370 may rotate while the pinion gear teeth 373 and the internal gear teeth 335 are engaged with each other. The pinion gears 370 (i) may rotate in engagement with the internal gear part 330 (the ring gear RG) in a fixed state (the washing mode), or (ii) may rotate in engagement with the internal gear part 330 (the ring gear RG) in a rotating state (the spin-drying mode). In this embodiment, the internal gear teeth 335 and the pinion gear teeth 373 may be configured as helical gears. For another example, the internal gear teeth 335 and the pinion gear teeth 373 may be configured as spur gears.

The sun gear 340 may be disposed in the inner space 322. The sun gear 340 may be the input shaft. That is, the sun gear 340 may receive the rotational force of the rotor 230. The sun gear 340 may rotate integrally with the rotor 230. The sun gear 340 may always rotate together with the rotor 230 when the rotor 230 rotates, and may transmit the rotational force to the drum shaft 80 through the gear assembly 300.

In this embodiment, the sun gear 340 may be formed as a solid structure rather than a hollow structure. The sun gear 340 serves only as the input shaft, and the carrier 360 functions as the output shaft, and thus the sun gear 340 does not need to have a hollow structure to be coupled to the drum shaft 80. As a result, the strength of the sun gear 340 may be increased. Additionally, the sun gear 340 does not need to protrude further toward the drum shaft 80 to be coupled thereto. Therefore, the axial length of the sun gear 340 may be decreased, and this may (i) reduce the overall axial length of the gear assembly 300 and (ii) increase the strength of the sun gear 340.

On the outer circumferential surface of the body of the sun gear 340, a rotor connection part 341 and a transmission gear part 343 may be provided to be spaced axially apart from each other. The rotor connection part 341 may be provided on the outer circumferential surface of the body of the sun gear 340, and may be connected to the rotor 230.

The rotor connection part 341 may be a spline or serration. The rotor connection part 341 may be coupled to a central coupling hole 357 formed in the center of the sun gear coupling part 355, which will be described later. The rotor connection part 341 is not a gear structure, but is combined with the sun gear coupling part 355 to allow the sun gear 340 to rotate together with the coupling unit 350.

The transmission gear part 343 may be spaced apart from the rotor connection part 341 along the axial direction of the sun gear 340. The transmission gear part 343 may be engaged with the pinion gear teeth 373 of the pinion gears 370. The transmission gear part 343 connects the rotation of the sun gear 340 to the rotation of the pinion gears 370. The transmission gear part 343 may be formed to have a larger diameter than the rotor connection part 341. In this embodiment, the transmission gear part 343 has a helical gear structure, but as another example, the transmission gear part 343 may be configured as a spur gear.

The coupling unit 350 may be coupled to the rotor 230. The coupling unit 350 may be viewed as a component that connects the rotor 230 with the sun gear 340, and selectively connects the rotor 230 with the clutch 410. The coupling unit 350 may include the clutch coupling part 351 and the sun gear coupling part 355 coupled to the clutch coupling part 351. As another example, the clutch coupling part 351 and the sun gear coupling part 355 may be provided integrally. As still another example, the coupling unit 350 may be provided to be integrated with the rotor body 231, or the sun gear 340 may be directly connected to the rotor body 231.

Referring to FIG. 10, a coupling gear 352 is provided on the lower surface of the clutch coupling part 351. The coupling gear 352 may protrude rearward. The coupling gear 352 may be engaged with a clutch gear 417 of the clutch 410 to be described below, or may be disengaged from the clutch gear 417. When the coupling gear 352 is engaged with the clutch gear 417, it may be a rotating state (the spin-drying mode), and when the coupling gear 352 is disengaged from the clutch gear 417, it may be a locked state (the washing mode/the initial spin-drying mode) or a neutral state (the synchronization mode). This structure will be described in more detail again below.

A coupling hole 353A may be open at the center of the clutch coupling part 351, and the sun gear coupling part 355 may be disposed in the coupling hole 353A. The clutch coupling part 351 may have the plurality of fixing protrusions 354 provided around the coupling hole 353A. The fixing protrusions 354 may be inserted into the coupling holes 235 of the rotor 230 so that the coupling unit 350 including the clutch coupling part 351 may rotate together with the rotor 230.

The clutch coupling part 351 may have coupling recesses 353B (see FIG. 10) recessed in the inner surface of the coupling hole 353A. Coupling protrusions 358 of the sun gear coupling part 355 may be fitted into the coupling recesses 353B, so that the clutch coupling part 351 and the sun gear coupling part 355 may rotate together.

The sun gear coupling part 355 may have a coupling groove part 356 formed at the center thereof. The coupling groove part 356 may be open forward, and the second support bearing B2 may be arranged inside the coupling groove part 356. The second support bearing B2 may be arranged between the inner surface of the coupling groove part 356 and the rotation support part 321C of the ring gear RG to assist the relative rotation of the coupling unit 350 and the ring gear RG.

The central coupling hole 357 may be formed at the center of the sun gear coupling part 355. The inner periphery of the central coupling hole 357 may include a spline or serration. A portion of the sun gear 340 may be inserted and fixed into the central coupling hole 357. More precisely, the rotor connection part 341 of the sun gear 340 may be inserted into the central coupling hole 357, so that the sun gear 340 and the sun gear coupling part 355 may be coupled to each other. Accordingly, the sun gear 340 and the coupling unit 350 may rotate or stop simultaneously.

The carrier 360 may be disposed in the inner space 322. The carrier 360 may support the rotation of the pinion gears 370 and may rotate along the pinion gears 370. More precisely, the carrier 360 may be rotated in conjunction with the revolution of the pinion gears 370. The carrier 360 may be provided with the output part 363, so that the carrier 360 may rotate the drum shaft 80. That is, it may be considered that the result of the rotational motion of the gear assembly 300 is transmitted to the drum shaft 80 through the carrier 360.

Looking at the structure of the carrier 360, the carrier 360 may include the carrier body 361 and a carrier cover 365. The carrier body 361 may be disposed to be spaced apart from the carrier cover 365 more forward than the carrier cover 365 with the pinion gears 370 interposed therebetween. The output part 363 may protrude from the carrier body 361. The output part 363 may have a spline or serration formed thereon so that output part 363 may be coupled to the shaft coupling recess 83 of the drum shaft 80. The shaft coupling recess 83 may also have a spline or serration formed thereon.

The carrier body 361 and the carrier cover 365 may have shaft support holes 362 and 367, respectively, formed at corresponding positions. Opposite ends of pinion shafts 372, which serve as rotation shafts of the pinion gears 370, may be fitted into the shaft support holes 362 and 367. In this embodiment, since the gear assembly 300 is provided with a total of four pinion gears 370, the shaft support holes 362 and 367 may also have four pairs of holes. In FIGS. 9 and 10, reference numeral SP is a spacer, and the spacer SP may be disposed between the surface of the sun gear 340 and the surface of the carrier body 361 to help smooth rotation of the sun gear 340. The spacer SP may be omitted.

Looking at the pinion gears 370, the pinion gears 370 may be arranged to surround the sun gear 340. The pinion gears 370 may rotate by being engaged with the sun gear 340 and the internal gear part 330. To be precise, it may be considered that the pinion gears 370 are arranged between the outer circumferential surface of the sun gear 340 and the inner circumferential surface of the internal gear part 330 to output a rotational force input through the sun gear 340 to the internal gear part 330. If the internal gear part 330 is fixed by the clutch 410, the pinion gears 370 may revolve along the internal gear part 330 while simultaneously rotating. Conversely, if the internal gear part 330 rotates together with the clutch 410, the pinion gears 370 may not rotate but revolve around the sun gear 340 while rotating together with the internal gear part 330.

The pinion gear teeth 373 may be provided on the surface of each of the pinion gears 370. The pinion gear teeth 373 may be engaged with the internal gear teeth 335. In this embodiment, the pinion gear teeth 373 may be configured as a helical gear. This may reduce noise generated when the gears operate.

Looking at the bearings that assist in the rotation of the gear assembly 300, the bearings may include the first support bearing B1 and the second support bearing B2, which are described above, and an output bearing B3. The first support bearing B1 may be arranged between the outer circumferential surface of the sun gear 340 and the inner circumferential surface of the rotation support part 321C. The second support bearing B2 may have a larger radius than the first support bearing B1. The second support bearing B2 may be arranged to surround the outer surface of the first support bearing B1. More precisely, the second support bearing B2 may be disposed between the outer circumferential surface of the rotation support part 321C and the sun gear coupling part 355 constituting the coupling unit 350. In this case, as described above, the first support bearing B1 and the second support bearing B2 may be arranged to overlap each other in the radial direction of the sun gear 340.

The output bearing B3 may be arranged between the outer circumferential surface of the drum shaft 80 and the second housing 325 of the ring housing part 320. Referring to FIG. 8, the output bearing B3 may be disposed between a through hole (a reference numeral not given) formed at the center of the second housing 325 and the shaft coupling recess 83 of the drum shaft 80. A shaft coupling part 84 (see FIG. 27) may be provided on the first end part of the drum shaft 80, and the shaft coupling recess 83 having a recessed shape may be formed in the shaft coupling part 84, and the output bearing B3 may be arranged outside the shaft coupling part 84. Accordingly, the output bearing B3 may perform smooth relative rotation between the drum shaft 80 and the ring gear RG including the ring housing part 320.

For reference, two drive bearings B4 and B5 shown in FIGS. 4 to 6 may be arranged between the drum shaft 80 and the tub 50, and assist in the rotation of the drum shaft 80 relative to the tub 50. A first drive bearing B4 and a second drive bearing B5, which constitute the drive bearings B4 and B5, may be spaced apart from each other in the axial direction of the drum shaft 80.

Next, the clutch 410 and the actuator 400 that drives the clutch 410 will be described. The actuator 400 may be fixed to the supporter 310. The actuator 400 may move the clutch 410 forward and backward while in a fixed state. The actuator 400 may be provided with a separate drive motor (not shown) and internal gears (not shown), so that the clutch 410 may be moved by the driving force of the drive motor.

The actuator 400 may include the drive module 401. The drive module 401 may accommodate the drive motor and the internal gears that constitute the actuator 400. The internal gears provided inside the drive module 401 may reduce the rotation of the drive motor and generate a driving force to move the clutch lever 420 rectilinearly.

The actuator 400 may be provided with a pinion part 405. The pinion part 405 may be connected to the internal gears and rotate. The pinion part 405 may be engaged with a rack part 430 provided on the clutch lever 420, and may move the rack part 430 rectilinearly. Referring to FIG. 10, the pinion part 405 may be disposed on the opposite side of the gear assembly 300 with respect to the supporter 310, that is, on the front side.

Looking at the clutch 410, the clutch 410 may have an approximately ring-shaped form. The clutch 410 may surround the gear assembly 300. The clutch 410 may be moved forward and backward while surrounding the gear assembly 300. Since the clutch 410 is held by the clutch lever 420, the clutch 410 may move together with the clutch lever 420.

The outer circumferential surface of the clutch 410 may be provided with a lever coupling part 411 that is relatively recessed toward the center of the clutch 410. The clutch lever 420 may hold the lever coupling part 411 and move the clutch 410. For another example, the lever coupling part 411 may have a protruding structure and the clutch lever 420 may have a sunken structure.

The inner circumferential surface of the clutch 410 may be provided with the sliding teeth 413. The sliding teeth 413 may have a gear structure extending in the moving direction of the clutch 410 on the inner circumferential surface of the clutch 410. The sliding teeth 413 may be engaged with the guide teeth 323 provided on the outer circumferential surface of the ring housing part 320. The sliding teeth 413 may move only rectilinearly forward and backward without rotating while the sliding teeth 413 are engaged with the guide teeth 323.

A first end part of the clutch 410 may be provided with the locking protrusions 415. The locking protrusions 415 may be coupled to the locking parts 315 of the supporter 310. When the locking protrusions 415 are engaged with the locking parts 315, the clutch 410 may be unable to rotate. The locking protrusions 415 may protrude forward from the surface of the clutch 410, i.e., toward the rear surface of the tub 50.

A second end part of the clutch 410 may be provided with the clutch gear 417. The clutch gear 417 may engage with the coupling gear 352 of the clutch coupling part 351 when the clutch 410 moves rearward. When the clutch 410 is released from the locking parts 315 and engages with the coupling gear 352, the clutch 410 may rotate together with the rotor 230. Accordingly, the ring gear RG coupled to the clutch 410 may also rotate together.

The clutch gear 417 may extend in an inclined direction along the circumferential direction of the clutch 410. More precisely, the clutch gear 417 has a shape that is inclined downward in one direction along the circumferential direction of the clutch 410. This shape allows the clutch gear 417 to be stably engaged with the coupling gear 352 even when the clutch 410 is rotating. This structure will be described again below.

Meanwhile, the clutch 410 may be moved rectilinearly by the clutch lever 420. The clutch lever 420 may be considered as a part of the actuator 400. The clutch lever 420 may move the clutch 410 while being moved by the motor 200 of the actuator 400. The clutch lever 420 may surround the gear assembly 300. The clutch lever 420 may be moved forward and backward while surrounding the gear assembly 300. Since the clutch lever 420 holds the clutch 410, the clutch 410 may move together with the clutch lever 420.

The clutch lever 420 may be provided with a lever arm 425. The lever arm 425 may be coupled to the lever coupling part 411 of the clutch 410. The lever arm 425 may implement holding the lever coupling part 411. In this embodiment, the lever arm 425 may be configured as a pair of lever arms, and the pair of lever arms 425 may be extended in an approximately semicircular shape.

The clutch lever 420 may be provided with the rack part 430. The rack part 430 may be engaged with the pinion part 405 to convert the rotational movement of the drive motor provided in the actuator 400 into rectilinear movement. The detailed structure of the clutch lever 420, including the rack part 430, will be described again below.

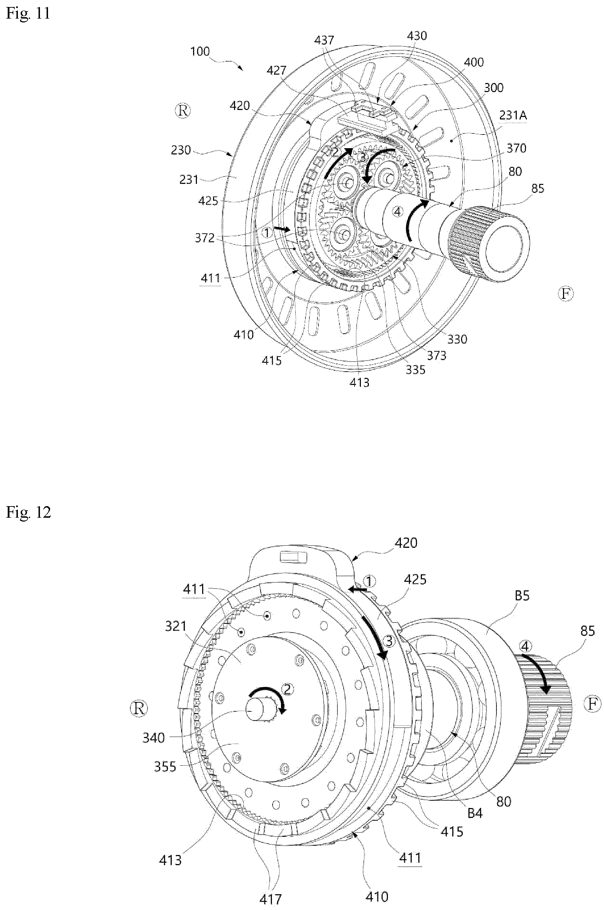

Referring to FIGS. 11 and 12, the operating structure of the gear assembly 300 will be described. For reference, FIGS. 11 and 12 have some parts omitted to allow a better view of the rotation of the gears. In FIG. 11, the stator 220, the supporter 310, and the ring housing part 320 are omitted.

In FIG. 11, when the clutch 410 moves forward (in the direction of arrow ①), the clutch 410 may be in the locked state. The locking protrusions 415 of the clutch 410 may be engaged with the locking parts 315 of the supporter 310. In this way, when the clutch 410 is in the locked state, the clutch 410 and the ring gear RG coupled to the clutch 410 may not rotate when the rotor 230 rotates. FIG. 11 illustrates the internal gear part 330 constituting the ring gear RG.

Accordingly, the internal gear part 330 may not rotate, but the sun gear 340 coupled to the rotor 230 may rotate. In FIG. 11, the sun gear 340 is covered by the drum shaft 80. The sun gear 340 may rotate clockwise with respect to FIG. 11. When the sun gear 340 rotates, the pinion gears 370 engaged with the sun gear 340 move along the fixed internal gear part 330 (in the direction of arrow ②). Here, the movement of the pinion gears 370 along the internal gear part 330 may constitute revolution. At the same time, the pinion gears 370 may rotate in the opposite direction to the sun gear 340 (in the direction of arrow ③).

In addition, due to the revolution of the pinion gears 370, the carrier 360 may rotate together. The carrier 360 is not shown in FIG. 11, but may rotate clockwise. The drum shaft 80, which is coupled to the output part 363 of the carrier 360, may rotate the drum 30 while rotating clockwise (in the direction of arrow ④). Accordingly, as the pinion gears 370 simultaneously undergo revolution and rotation, a reduction in rotational speed and a corresponding increase in torque may occur during the process. Accordingly, when a large force is required for the rotation of the drum 30, for example, in the washing mode in which the weight of water is added, or in the initial spin-drying mode in which spin-drying begins, an operation like that of FIG. 11 may be performed.

Referring to FIG. 12, the operation of the clutch 410 when the clutch 410 moves rearward will be described. For reference, the rotor 230 is omitted in FIG. 12 to better show the gears. When the clutch 410 moves rearward, i.e. in the direction of the rotor 230 (in the direction of arrow ①), the clutch 410 may rotate together with the rotor 230. This is because the clutch gear 417 of the clutch 410 is engaged with the coupling gear 352 of the coupling unit 350.

When the rotor 230 rotates clockwise with reference to FIG. 12, the sun gear 340 coupled thereto may rotate in the same direction as the direction of arrow ②. When the sun gear 340 rotates, the pinion gears 370 engaged with the sun gear 340 may rotate, and the ring gear RG engaged with the pinion gears 370 also rotates. In this case, the ring gear RG may be coupled to the clutch 410, and the clutch 410 may be connected to the rotor 230 and rotate together with the rotor 230. Accordingly, the clutch 410 and the ring gear RG may rotate at the same speed and in the same direction (in the direction of arrow ③).

The carrier 360, which is rotated by the pinion gears 370, may rotate the drum shaft 80 (in the direction of arrow ④). The carrier 360 may rotate at the same speed as the revolution speed of the pinion gears 370. Since the pinion gears 370 only revolve and do not rotate, the rotational speed of the carrier 360 and the drum shaft 80 may be the same as the rotational speed of the rotor 230. In this case, the input speed and output speed may be the same. Accordingly, the drum 30 may be rotated at high speed. When a large force is not required but the drum 30 needs to be rotated at a high speed, for example, in the spin-drying mode in which spin-drying is being performed, a rotational movement like that shown in FIG. 12 may be achieved.

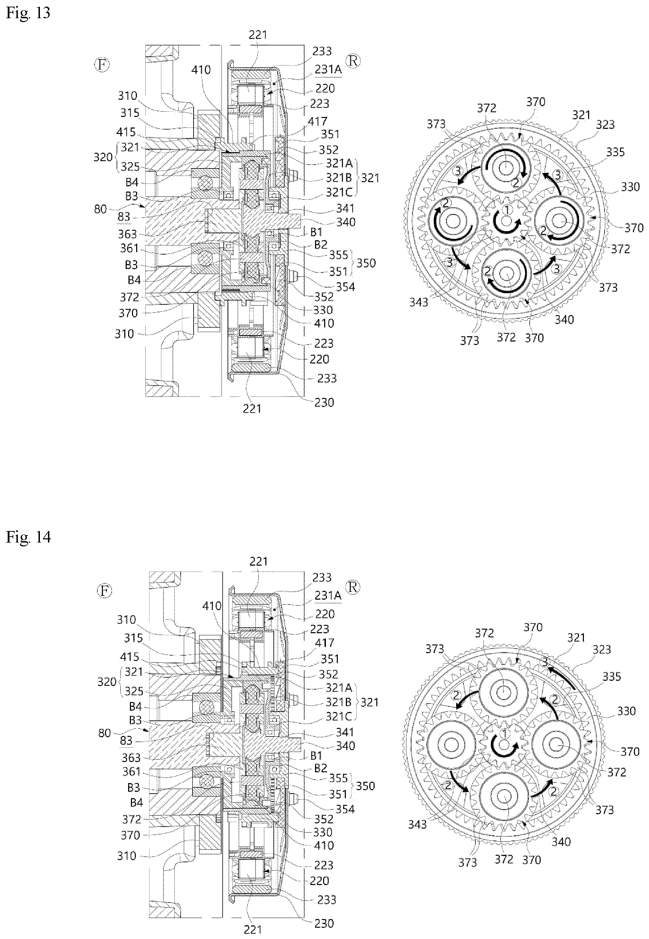

This process will be described in more detail with reference to FIGS. 13 and 14. FIG. 13 shows the washing mode or the initial spin-drying mode, which requires a large force, and FIG. 14 shows the spin-drying mode, which requires a high speed. For reference, FIGS. 13 and 14 show the internal cross-sectional view of the drum rotating device 100 on the left side, and show the rotational directions of components constituting the gear assembly 300 on the right side.

First, looking at FIG. 13, the clutch 410 moves forward, and the locking protrusions 415 of the clutch 410 are held in the locking parts 315 of the supporter 310. The clutch gear 417 of the clutch 410 may be spaced apart from the coupling gear 352 of the clutch coupling part 351. In this case, the clutch 410 may not rotate together with the clutch coupling part 351 and may be fixed to the supporter 310, i.e., be in the locked state. The entire ring gear RG including the ring housing part 320 coupled to the clutch 410 may also be in the locked state.

In this state, when the rotor 230 rotates, the rotational force of the rotor 230 may be transmitted to the sun gear 340. When the sun gear 340 rotates (in the direction of arrow ①), the pinion gears 370 engaged with the sun gear 340 may rotate in a direction opposite to that of the sun gear 340 (in the direction of arrow ②). In this case, since the ring gear RG is in the locked state, the pinion gears 370 may rotate while revolving along the ring gear RG (in the direction of arrow ③). When the pinion gears 370 rotate on their axes, the pinion gears 370 may revolve along the fixed ring gear RG. In this process, the gear assembly 300 may be decelerated.

When the pinion gears 370 revolve, the carrier 360 connected to the pinion gears 370 may rotate together with the pinion gears 370 in synchronization with the revolution of the pinion gears 370. The rotational force of the carrier 360 may be transmitted to the drum shaft 80 coupled to the output part 363 of the carrier 360, so that the drum shaft 80 may rotate.

In this case, a reduction ratio due to the rotation of the pinion gears 370 is calculated as "Reduction ratio = (Number of teeth of the internal gear 335 / Number of teeth of the transmission gear part 343) + 1." In this embodiment, the sun gear 340 may be formed to have a small diameter by being separated from the output shaft, and therefore he transmission gear part 343 may also be formed to be a smaller diameter compared to the internal gear part 330. Accordingly, the reduction ratio may increase.

Referring to FIG. 14, the clutch 410 may move rearward, the locking protrusions 415 of the clutch 410 may be separated from the locking parts 315 of the supporter 310, and the clutch gear 417 may be engaged with the coupling gear 352 of the clutch coupling part 351. That is, FIG. 14 shows a state of the spin-drying mode in which the drum rotating device 100 is driven at a small torque and high speed. In this case, since the clutch 410 is free from the supporter 310, the clutch 410 may be a state in which the clutch 410 rotates together with the clutch coupling part 351, that is, the rotating state. The entire ring gear RG including the ring housing part 320 coupled to the clutch 410 may also be in the rotating state.

In this state, when the rotor 230 rotates, the rotational force of the rotor 230 may be transmitted to the sun gear 340. When the sun gear 340 rotates (in the direction of arrow ①), the pinion gears 370 engaged with the sun gear 340 rotate around the sun gear 340 (in the direction of arrow ②). The pinion gears 370 may be also engaged with the ring gear RG, and the clutch 410 may be in the rotating state, so the ring gear RG may also rotate. That is, since the ring gear RG is connected to the clutch coupling part 351 of the rotor 230 through the clutch 410 and is rotated by the rotor 230, the rotational force of the pinion gears 370 may not be used to rotate the ring gear RG. Accordingly, the pinion gears 370 may only revolve (in the direction of arrow ②) without rotating on their axes to rotate the ring gear RG, and the ring gear RG may also rotate in the same direction (in the direction of arrow ③).

As a result, the rotational speeds of the rotor 230, the sun gear 340, the ring gear RG, and the carrier 360 may be the same. The pinion gears 370 may revolve together with the ring gear RG at the same speed as the ring gear RG. Accordingly, the sun gear 340, the pinion gears 370, and the ring gear RG may have a speed of 1:1 without relative speed with each other, and this may be viewed as a direct connection state in which the input shaft and the output shaft are directly connected. In this case, the drum shaft 80 may rotate at the same speed as the rotor 230, so the drum shaft 80 may rotate at a high speed to spin-dry laundry.

Meanwhile, in this embodiment, the clutch 410 may have a total of three states. Depending on the state of the clutch 410, the drum rotating device 100 may implement different operating modes. More precisely, the clutch 410 may include (i) the locked state in which the clutch 410 is connected to the supporter 310 and the rotation of the clutch 410 stops, (ii) the rotating state in which the clutch 410 is connected to the coupling unit 350 and rotates together with the coupling unit 350, and (iii) the neutral state in which the clutch 410 is spaced apart from the supporter 310 and the coupling unit 350. Here, (i) the locked state allows the washing and the initial spin-drying mode of the drum rotating device 100 to be performed, (ii) the rotating state allows the spin-drying mode of the drum rotating device 100 to be performed, and (iii) the neutral state allows a transition from the initial spin-drying mode to the spin-drying mode to be performed.

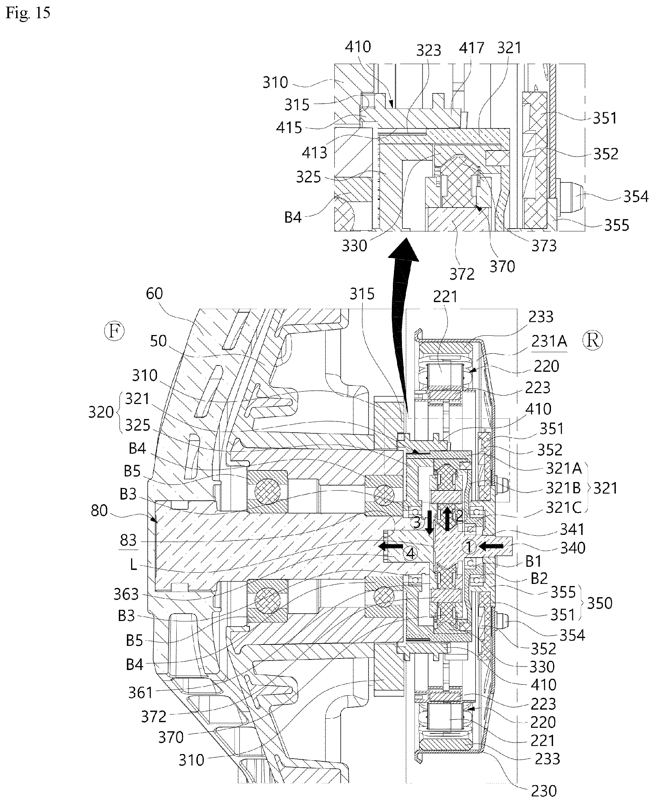

FIGS. 15 to 17 show the three states of the clutch 410 described above, respectively. FIG. 15 illustrates the locked state. The locked state is a state in which the clutch 410 moves forward and the locking protrusions 415 of the clutch 410 are engaged with the locking parts 315 of the supporter 310. At the same time, the clutch gear 417 of the clutch 410 is spaced apart from the coupling gear 352 of the clutch coupling part 351. In this case, the clutch 410 may not rotate together with the clutch coupling part 351 and may be fixed to the supporter 310, i.e., be in the locked state. The entire ring gear RG, including the ring housing part 320 combined with the clutch 410, may also be in the locked state.

In this state, when the rotor 230 rotates, the rotational force of the rotor 230 may be transmitted to the sun gear 340 (arrow ). When the sun gear 340 rotates, its rotational force may be transmitted to the pinion gears 370 (arrow ②), and the pinion gears 370 may rotate. The rotational force of the pinion gears 370 may be transmitted to the carrier 360 (arrow ③), causing the carrier 360 to rotate. The rotational force of the carrier 360 may be transmitted to the drum shaft 80 coupled to the output part 363 of the carrier 360 (arrow ④), so that the drum shaft 80 may rotate. In this process, deceleration may be achieved by the gear assembly 300.

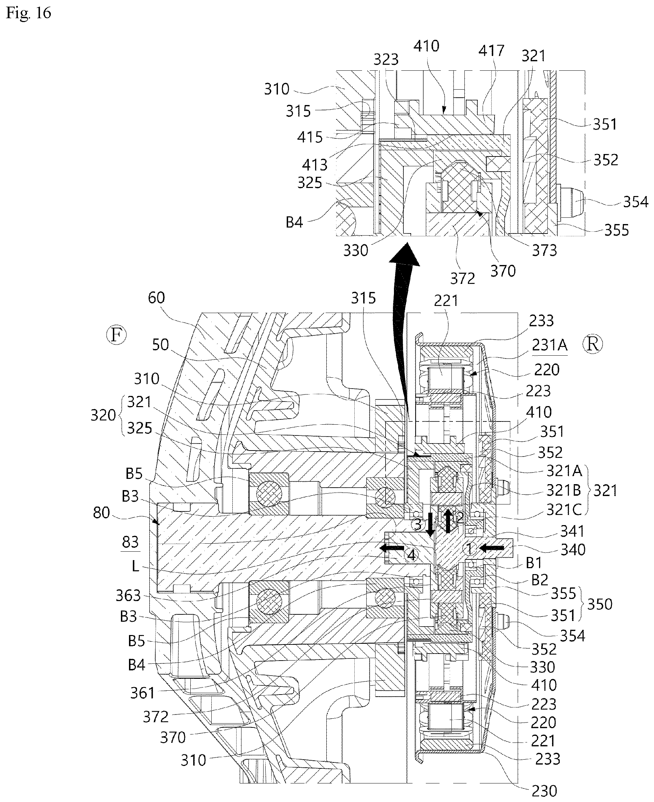

FIG. 16 illustrates the neutral state of the clutch 410. The neutral state is a state in which the clutch 410 moves rearward and the locking protrusions 415 of the clutch 410 are separated from the locking parts 315 of the supporter 310. At the same time, the clutch gear 417 of the clutch 410 is separated from the coupling gear 352 of the clutch coupling part 351. In this case, the clutch 410 may be in a state rotatable together with the ring gear RG, but since the clutch 410 is not connected to the rotor 230, the clutch 410 may not directly receive the rotational force of the rotor 230.

In this state, when the rotor 230 rotates, the rotational force of the rotor 230 may be transmitted to the sun gear 340 (arrow ①). When the sun gear 340 rotates, its rotational power may be transmitted to the pinion gears 370 (arrow ②), so that the pinion gears 370 may rotate. The rotational force of the pinion gears 370 may be transmitted to the carrier 360 (arrow ③), causing the carrier 360 to rotate. The rotational power of the carrier 360 may be transmitted to the drum shaft 80 coupled to the output part 363 of the carrier 360 (arrow ④), so that the drum shaft 80 may rotate. In this case, although the clutch 410 is in the neutral state, the carrier 360 may maintain the rotating state from the locked state due to inertia, so the deceleration by the gear assembly 300 may be maintained.

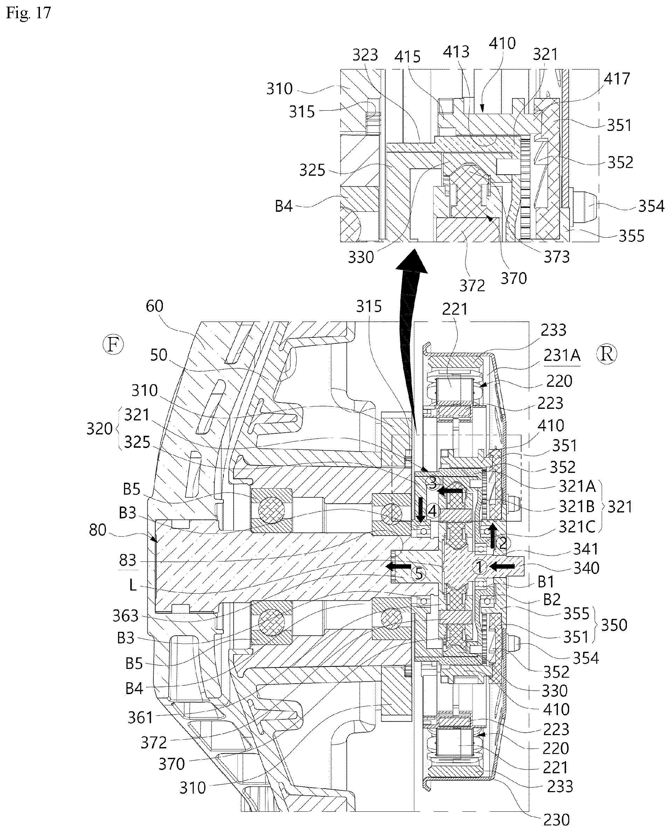

FIG. 17 illustrates the rotating state of the clutch 410. The rotating state is a state in which the clutch 410 moves rearward and the locking protrusions 415 of the clutch 410 are separated from the locking parts 315 of the supporter 310. At the same time, the clutch gear 417 of the clutch 410 may be engaged with the coupling gear 352 of the clutch coupling part 351. In this case, the clutch 410, together with the ring gear RG, is capable of rotating together with the rotor 230. That is, the clutch 410 and the ring gear RG may be connected to the rotor 230 and may directly receive the rotational force of the rotor 230.

In this state, when the rotor 230 rotates, the rotational force of the rotor 230 may be transmitted to the sun gear 340 (arrow ①). At the same time, the rotational force of the rotor 230 may be transmitted even to the ring gear RG that is engaged with the rotor 230 (arrow ②). Accordingly, the ring gear RG may rotate the pinion gears 370 that are engaged with the ring gear RG, and the rotational force of the pinion gears 370 may be transmitted to the carrier 360 (arrow ③). Finally, the rotational force of the carrier 360 may be transmitted to the drum shaft 80 coupled to the output part 363 of the carrier 360 (arrow ④), so that the drum shaft 80 may rotate. In this way, since the rotational force of the rotor 230 is transmitted to the drum shaft 80 without deceleration, the gear assembly 300 may be considered as directly connecting the rotor 230 and the drum shaft 80.

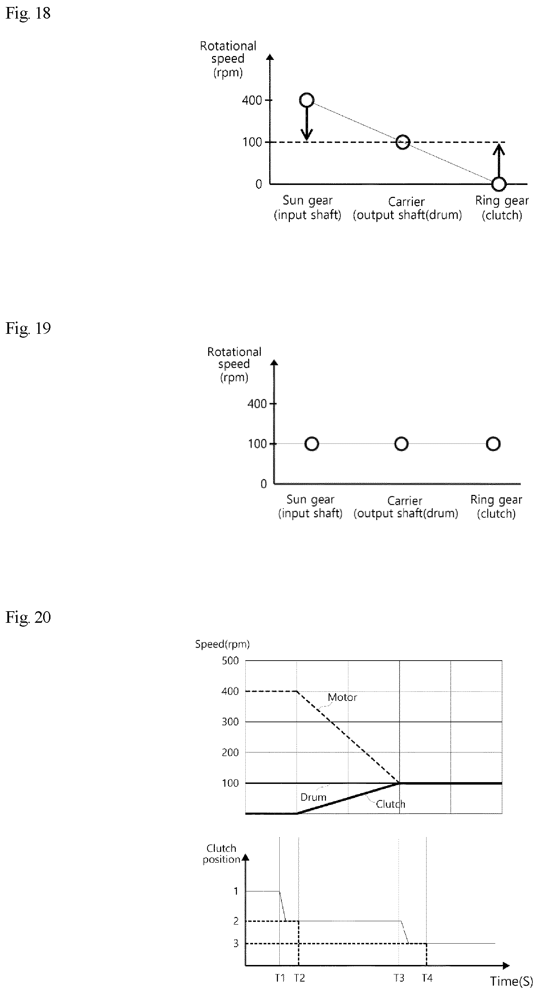

FIGS. 18 and 19 briefly show graphs of the speed changes of the input shaft and the output shaft according to the state changes of the clutch 410. FIG. 18 compares the rotation speeds of the gears when the drum rotating device 100 is operated in the washing mode and the initial spin-drying mode while the clutch 410 is in the locked state. As is seen in the drawing, each of the clutch 410 and the ring gear RG is in the locked state, so speed thereof is 0. Since the sun gear 340 rotates at the same speed as the rotor 230, the speed of the sun gear 340 is 400 rpm. For reference, the 400 rpm is an example of one of the speeds of the sun gear 340.

The pinion gears 370, which rotate in engagement with the sun gear 340, undergo reduction in speed, since the pinion gears 370 revolve around the fixed ring gear RG while performing their own rotation, as described earlier. This reduced speed may be the rotational speed of the carrier 360. In this embodiment, the rotation speeds of the carrier 360 and the drum shaft 80 coupled to the carrier 360 may be reduced to about 100 rpm.

In this state, when the clutch 410 is switched from the locked state to the neutral state, that is, when the clutch 410 is released from the state in which the clutch 410 is held by the supporter 310, the clutch 410 and the ring gear RG may be rotatable. However, since the clutch 410 is not coupled to the rotor 230, the clutch 410 and the ring gear RG may not be rotated by the rotor 230. The pinion gears 370 and the carrier 360 may maintain continuous rotating states thereof by rotational inertia due to previous rotations thereof, and the clutch 410 and the ring gear RG may remain stationary due to the absence of change in the speed of the rotor 230.

In this case, the clutch 410 and the ring gear RG may be free from the supporter 310 and the rotor 230 by being spaced apart therefrom, and when the rotor 230 is decelerated, the clutch 410 and the ring gear RG may begin to rotate due to the deceleration force of the rotor 230. More precisely, when the rotor 230 is decelerated, the deceleration of the sun gear 340 connected to the rotor 230 (an arrow in FIG. 18) may begin. The deceleration of the sun gear 340 may be transmitted to the ring gear RG through the pinion gears 370, leading to acceleration of the ring gear RG (an arrow in FIG. 18).

As a result, as shown in FIG. 19, the speeds of the sun gear 340, the carrier 360, and the ring gear RG may be synchronized. For example, the sun gear 340, the carrier 360 and the ring gear RG may rotate at the speed of 100 rpm. In this case, as the clutch 410 moves further rearward while maintaining the rotating state, the clutch gear 417 of the clutch 410 may be engaged with the coupling gear 352 of the clutch coupling part 351. Although the clutch 410 is rotating, the parts may be synchronized at reduced speeds, so very little impact may occur when the gears are engaged. As a result, the gear assembly 300 may be shifted without stopping the motor 200, and changes between the modes may be made without interruption.

FIG. 20 shows graphs showing a state in which the speeds of the motor 200, the drum 30, and the clutch 410 change according to the state change of the clutch 410. In FIG. 20, the lower graph shows change in the position of the clutch 410 over time, and the upper graph shows change in the speeds of the motor 200, the drum 30, and the clutch 410 according to the position of the clutch 410. For reference, the upper part of a vertical axis in the lower graph showing the position of the clutch 410 represents the front side, and the lower part thereof represents the rear side. That is, a high position on the graph means that the clutch 410 is disposed at the front side.

As seen from this, the drum rotating device 100 may operate in the washing mode and the initial spin-drying mode until time T1. In this case, the clutch 410 is in the locked state in which the clutch 410 is fixed by being held on the locking parts 315 of the supporter 310 at the most forward position. In this section, the drum 30 may be operated in a low-speed/high-torque state by the deceleration of the gear assembly 300.

T1-T3 represents the sections of the synchronization mode. In this embodiment, the synchronization mode may be divided into a first synchronization mode and a second synchronization mode. More precisely, the synchronization mode may include the first synchronization mode (section T1-T2) in which the clutch 410 moves from the locked state to the neutral state, and the second synchronization mode (section T2-T3) in which the clutch 410 maintains the neutral state while simultaneously controlling the reduction of the rotational speed of the rotor 230.

Looking at the first synchronization mode, the clutch 410 may start moving rearward from time T1. A section from T1 to T2 may be the movement section of the clutch 410. Here, the movement of the clutch 410 may be a rearward movement, and between T1 and T2, the clutch 410 may move out of the supporter 310 and reach the neutral state. Even after reaching the neutral state, the clutch 410 may maintain the neutral state without moving further rearward until reaching T2.

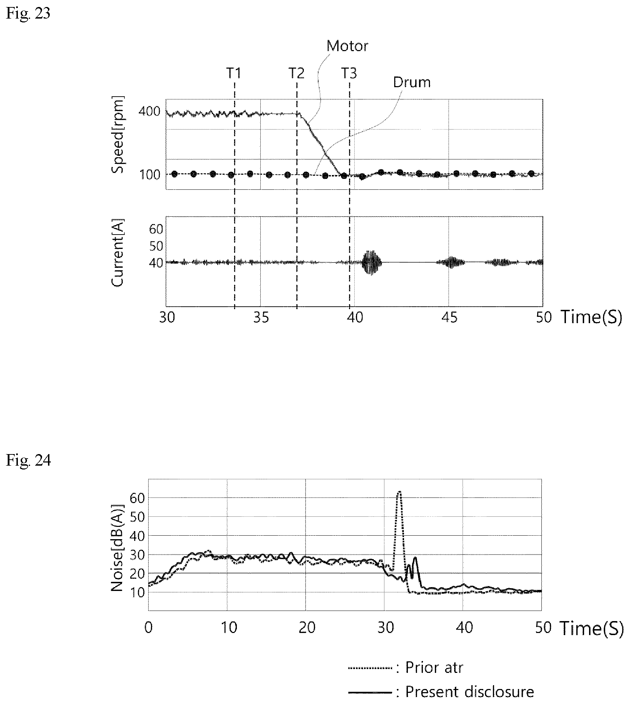

In this case, the first synchronization mode may again include (i) a clutch movement stage in which the clutch 410 moves from a first position to a third position, and a clutch standby stage in which the clutch 410 remains at the third position for a set period of time. In FIG. 20, T1 to T1' are the clutch movement stage, and T1'-T2 are the clutch standby stage. The clutch standby stage, which is the section T1'-T2, is also expressed in the graph of FIG. 23. By having the clutch standby stage, the neutral state may be maintained for a predetermined period of time, allowing the carrier 360 to obtain sufficient rotational inertia. To this end, a waiting time WT (time between T1' and T2) during which the clutch standby stage is performed may be longer than a movement time MT (time between T1 and T1') during which the clutch movement stage is performed.

To be in more detail, when the first synchronization mode, in which the neutral state is maintained for a predetermined period of time, is performed, the pinion gears 370 and the carrier 360 may obtain sufficient rotational inertia. More precisely, the carrier 360 may be coupled to the drum 30 and may be maintained to be rotated by the rotational inertia of the drum 30, and accordingly, the pinion gears 370 coupled to the carrier 360 may be maintained to be rotated. In this case, when the neutral state is maintained for a predetermined period of time in the first synchronization mode, the rotational inertia of the carrier 360 due to the rotational inertia of the drum 30 may increase. As a result, the pinion gears 370 and the carrier 360 may continue to maintain the rotating states due to the rotational inertia, and the clutch 410 and the ring gear RG may be in rotatable states but maintain to stop due to the absence of change in the speed of the rotor 230.

Next, T2-T3 may be the section of the second synchronization mode section. While the clutch 410 maintains the neutral state from T2 to T3, the deceleration of the motor 200 may be performed. Even if the motor 200 is decelerated, the carrier 360 may be coupled to the drum 30 and be maintained to be rotated by the rotational inertia of the drum 30, and accordingly, the pinion gears 370 coupled to the carrier 360 may maintained to be rotated. As seen in the upper graph of FIG. 20, the speed of the drum 30 may be maintained even while the motor 200 is decelerated, and accordingly, the speeds of the carrier 360 and the pinion gears 370 may also be maintained.

Accordingly, when the speeds of the carrier 360 and the pinion gears 370 are maintained even though the rotor 230 and the sun gear 340 coupled to the rotor 230 are decelerated, the deceleration force of the sun gear 340 may be transmitted to the ring gear RG and the clutch 410 through the pinion gears 370, thereby accelerating the ring gear RG and the clutch 410. As seen in the upper graph of FIG. 20, the speed of the clutch 410 may be seen increasing in the section T2-T3. In the section T2-T3, the deceleration of the motor 200 may be achieved via a controller.

In the section T2-T3, the speed of the motor 200 (the rotor 230) may decrease and the speed of the clutch 410 (the ring gear RG) may increase, so the speeds of the motor 200 and the clutch 410 may be synchronized. For example, when the speeds of the clutch 410 and the rotor 230 are synchronized at 100 rpm, no significant vibration may occur even if the clutch 410 and the rotor 230 are coupled together. Accordingly, the clutch gear 417 of the clutch 410 may be naturally engaged with the coupling gear 352 of the clutch coupling part 351.

In this embodiment, the relative ratio ST2/ST1 of a second synchronization time ST2 (time of the section T2-T3), at which the second synchronization mode is performed, to a first synchronization time ST1 (time of section T1-T2), at which the first synchronization mode is performed, may be 2 to 10. Accordingly, when the second synchronization time ST2 is formed relatively large, sufficient time may be secured for the rotational speed of the clutch 410 to be synchronized with the rotational speed of the rotor 230.

Section T3-T4 may be a process in which the clutch 410 in the neutral state moves further rearward again. When the clutch 410 moves rearward, the clutch gear 417 of the clutch 410 may be engaged with the coupling gear 352 of the clutch coupling part 351. Accordingly, the rotor 230 (the motor 200), the sun gear 340, the ring gear RG (the clutch 410), and the carrier 360 may rotate at the same speed without any speed difference therebetween. Accordingly, the spin-drying mode in which the rotational speed of the rotor 230 and the rotational speed of the drum 30 are 1:1 may be performed.

A relative ratio (MT/CT) of movement time MT (time of section T1-T1') required for the clutch 410 to move from the first position to the third position to total state transition time CT (time of section T1-T4) required for the clutch 410 to move from the first position to a second position may be 0.15 to 0.23. Accordingly, time required for the clutch 410 to transition to the neutral state may be short, and time required for synchronization and state transition may relatively long, so that a stable state transition may be achieved.

The operation states of components in each of these modes are summarized in table 1 below.

[Table 1

|  | Washing mode/Initial spin-drying mode /First synchronization mode | Second synchronization mode | Spin-drying mode |
|---|---|---|---|
| Rotor230 (motor 200) | Rotation | Rotation (deceleration) | Rotation |
| Sun gear 340 | Rotation | Rotation (deceleration) | Rotation |
| **Pinion** gears 370 | Revolution/Axial rotation | Revolution/Axial rotation | Revolution |
| Ring gear RG | Stationary | Rotation (acceleration) | Rotation |
| Clutch 410 | Stationary | Rotation (acceleration) | Rotation |
| Carrier 360 | Rotation (low speed) | Rotation (inertia) | Rotation (high speed) |
| Drum shaft 80 | Rotation (low speed) | Rotation (inertia) | Rotation (high speed) |

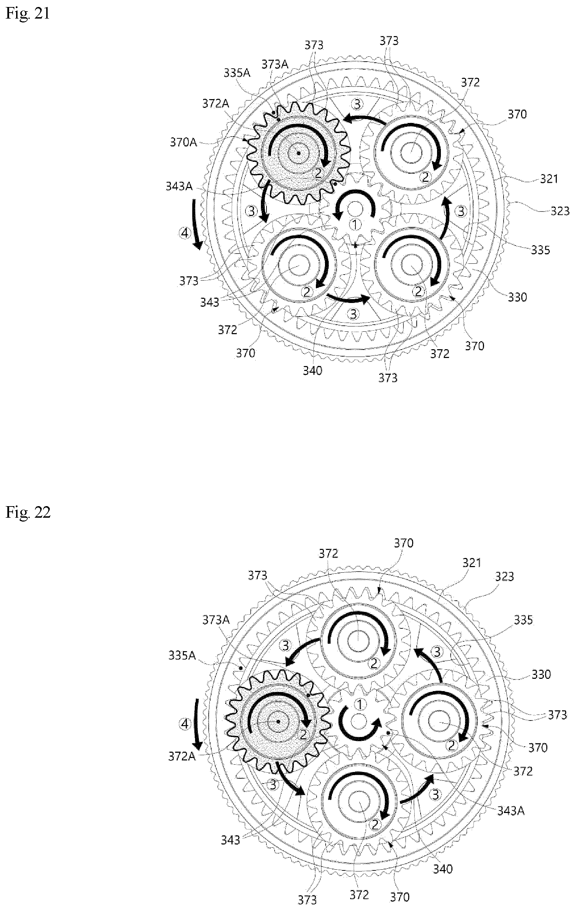

The second synchronization mode will be described in more detail by referring to the actual operation of the gear assembly 300. FIGS. 21 and 22 sequentially show the operation of the gear assembly 300 in the second synchronization mode. For reference, in FIGS. 21 and 22, among four pinion gears 370 that constitute the gear assembly 300, only one pinion gear 370A is expressed in a different color to distinguish it. This is to help understand the operation of the gear assembly 300 on the basis of the one pinion gear 370A, and the one pinion gear 370A will be referred to as a first pinion gear 370A.

The second synchronization mode may be a section in which the rotor 230 decelerates and, at the same time, the speed of the clutch 410 (the internal gear part 330) increases when the clutch 410 is released from the locked state to the rotating state. Referring to FIG. 21, the sun gear 340 coupled to the rotor 230 rotates counterclockwise (in the direction of arrow ①), and the first pinion gear 370A engaged with the sun gear 340 rotates (rotates) clockwise in the opposite direction (in the direction of arrow ②). In addition, the first pinion gear 370A may revolve counterclockwise (in the direction of arrow ③) along the ring gear RG, and the revolution of the first pinion gear 370A may be the rotation of the carrier 360.

In this case, the number of rotations of the sun gear 340 (the rotor 230) may be reduced, but the number of rotations of each of the carrier 360 and the first pinion gear 370A coupled to the drum 30 whose number of rotations is maintained by inertia may be maintained. In this case, difference may occur between the decreasing number of the rotations of the sun gear 340 and the maintaining number of rotations (revolutions) of the first pinion gear 370A. The clutch 410 (the internal gear part 330) may rotate by the difference between the numbers of rotations. Here, the number of rotations refers to the number of rotations during reference time, and thus may also be called rotational speed.

In FIG. 21, the internal gear part 330 rotates counterclockwise (in the direction of arrow ④) in the same direction as the rotation (revolution) direction of the first pinion gear 370A. That is, the rotation of the internal gear part 330, which has been stopped, begins. In FIGS. 21 and 22, in order to easily identify the rotation angles of the gears (i) one gear tooth of the transmission gear part 343 of the sun gear 340 is identified as a first transmission gear part 343A, (ii) one gear tooth of the internal gear teeth 353 is identified as a first internal gear tooth 353A, and (iii) one gear tooth of the pinion gear teeth 373 is identified as a first pinion gear tooth 373A. In the drawing, the gears 343A, 353A, and 373A are distinguished by dots.

Comparing FIGS. 22 with FIG. 21, the first pinion gear 370A was rotated (revolutionized) about 45 degrees counterclockwise, and the first pinion gear tooth 373A of the first pinion gear 370A was rotated about 90 degrees clockwise. Furthermore, the first transmission gear part 343A of the sun gear 340 was rotated 185 degrees counterclockwise, and the first internal gear tooth 353A was rotated about 30 degrees counterclockwise, which is smaller than the rotation angle of the first pinion gears 370A. That is, when considering the number of rotations over the same period of time, the rotational speed of the sun gear 340 is greater than the rotational speed of the first pinion gear 370A, which is greater than the revolutional speed of the first pinion gear 370A (= the rotational speed of the carrier 360 = the rotational speed of the drum 30), which in turn is greater than the rotational speed of the internal gear part 330 (= the rotational speed of the ring gear RG = the rotational speed of the clutch 410).

In this case, as the rotational speed of the sun gear 340 gradually decreases, the rotational speed of the internal gear part 330 (the ring gear RG) may conversely increase gradually. The result is that, as previously seen in FIG. 19, the rotational speed of the sun gear 340 and the rotational speed of the ring gear RG may be the same. In this case, as the rotational speed of the sun gear 340 decreases, the rotational speed of the ring gear RG increases, which is confirmed from the following formula for calculating the reduction ratio of the planetary gear.

$$Nr-Nc=-(Zs/Zr)*(Ns-Nc)$$

Here, Nr represents the rotational speed of the ring gear RG, Nc represents the rotational speed of the carrier 360, Ns represents the rotational speed of the sun gear 340, and Zs/Zr represents the tooth ratio of gears (Zs = the number of teeth of the sun gear 340 / Zr = the number of teeth of the ring gear RG). In this embodiment, the tooth ratio of the gears, i.e., the reduction ratio of the gears is 5, which can be calculated from Zr/Zs+1=40/10+1=5.

According to the above formula, it may be confirmed that when the rotational speed of the sun gear 340 decreases in the second synchronization mode, the rotational speed of the ring gear RG increases. First, to calculate the rotation speed of the carrier 360 in the first synchronization mode, the speed of the sun gear 340 is 500, and the ring gear RG is still fixed in the locked state in the first synchronization mode and the speed thereof is 0. Accordingly,

$$0-Nc=-(10/40)*(500-Nc),$$

and

Nc=100.

That is, when the speed of the sun gear 340 is 500, the rotational speed of the carrier 360 is 100 through the reduction ratio 5. For reference, here, the unit of speed may be RPM.

In this state, when the second synchronization mode is initiated, the speed of the sun gear 340 may be reduced from 500 to 400 and the carrier 360 may maintain the rotation speed of 100 due to inertia. Accordingly, to calculate the rotation speed of the ring gear RG,

$$Nr-100=-(10/40)*(400-100),$$

Nr=35.

That is, the rotation of the ring gear RG begins, and the rotational speed of the ring gear RG is slower than the rotational speed of the carrier 360.

Next, when the speed of the sun gear 340 is further reduced to 100, the speed of the ring gear RG further may increase. In this case, the carrier 360 still maintains a rotational speed of 100 due to inertia. Accordingly, to calculate the rotational speed of the ring gear RG,

$$Nr-100=-(10/40)*(100-100),$$

Nr=100.

That is, the rotational speed of the ring gear RG may be the same as the rotational speed of the sun gear 340. Accordingly, when the rotational speed of the ring gear RG is the same as the rotational speed of the sun gear 340, the second synchronization mode may be terminated, and the clutch 410 may be engaged with the coupling unit 350 without significant impact. As a result, during the section T2-T3 of FIG. 20, the speed of the motor 200 (the rotor 230) may decrease and the speed of the clutch 410 (the ring gear RG) may increase, so that the speeds of the motor 200 and the clutch 410 may be synchronized.

Table 2 below shows the speed of the ring gear RG calculated when the rotational speed of the sun gear 340, i.e. the rotational speed of the rotor 230, is gradually slowed down in the second synchronization mode, and speed difference between the two gears.

[Table 2

| | Sun gear speed (Ns) | Carrier speed (Nc) | Ring gear speed (Nr) | Speed difference between sun gear and ring gear |
|---|---|---|---|---|
| First synchronization mode | 500 | 100 | 0 | 500 |
| Second synchronization mode (1) | 400 | 100 | 35 | 365 |
| Second synchronization mode (2) | 300 | 100 | 50 | 250 |

(continued)

| | Sun gear speed (Ns) | Carrier speed (Nc) | Ring gear speed (Nr) | Speed difference between sun gear and ring gear |
|---|---|---|---|---|
| Second synchronization mode (3) | 200 | 100 | 75 | 125 |
| Second synchronization mode (4) | 100 | 100 | 100 | 0 |

Meanwhile, FIG. 23 is a graph showing the results of measuring the actual speeds of the rotor 230 and the drum 30 over time to check the operating status of components when this embodiment is applied to an actual laundry care apparatus. As is seen, in the section T1-T2, the first synchronization mode in which the clutch 410 moves and is transitioned from the locked state to the neutral state is performed. In addition, in the section T2-T3, the second synchronization mode in which the clutch 410 maintains the neutral state and the speed of the rotor 230 is decreased is performed.

In this process, it may be seen that despite the speed change of the rotor 230, the speed of the drum 30 remains constant and stable. In particular, at a time point T3, which is a point in which the synchronization mode is switched to the spin-drying mode, the clutch 410 may be coupled to the rotor 230, and even at this time, it may be seen that the speed change of the drum 30 is very small.

The lower graph of FIG. 23 shows the change of a current value over time. In the graph of FIG. 23, it may be seen that the current value remains constant over time, and in particular, the change of the current value is very small even at the time point T3 at which the synchronization mode is switched to the spin-drying mode. The time point T3 is a time point at which the clutch 410 is coupled to the rotor 230. It may be seen that since the clutch 410, which has undergone synchronization, is engaged with the rotor 230 without significant impact, the change of the current value is not large.

As a result, as shown in FIG. 24, noise generated at the time point of the coupling (30 seconds) between the clutch 410 and the rotor 230 according to this embodiment may be significantly lower compared to the prior art. As described above, the stable speed maintenance of the drum 30 and the noise reduction during the coupling of the clutch 410 may be achieved through (i) the fact that the synchronization mode is divided into the first synchronization mode and the second synchronization mode in this embodiment, and (ii) the shapes of the clutch gear 417 and the coupling gear 352. The shapes of the clutch gear 417 and the coupling gear 352 will be described again below.

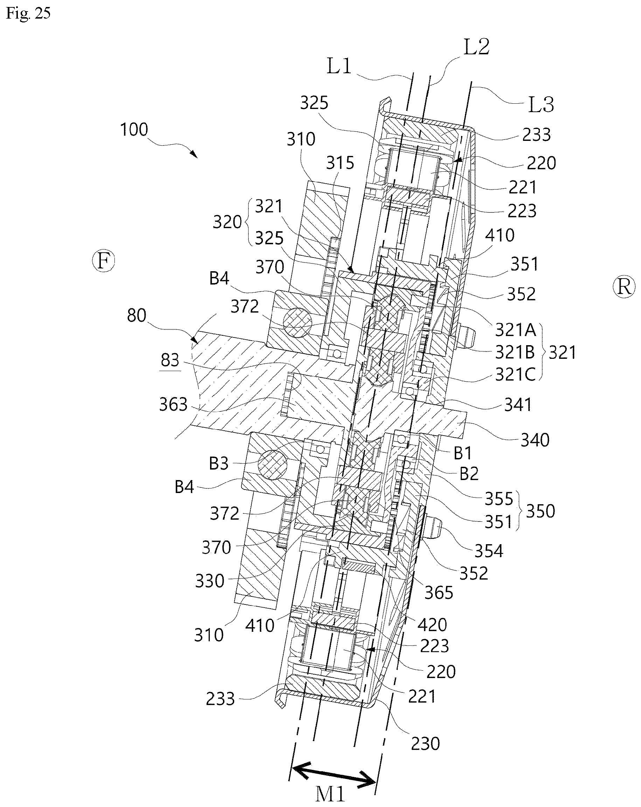

Meanwhile, FIG. 25 shows a cross-sectional view showing the structure of the drum rotating device 100 according to this embodiment. As described above, in this embodiment, the dividing line L1, which divides the interior of the drum rotating device 100 into the first area and the second area, may pass through a portion at which the first end part of the drum shaft 80 and an end part of the sun gear 340 face each other. The input shaft and the output shaft may be arranged in different areas on the basis of the dividing line L1.

In addition, there may be a bearing arrangement line L3 spaced apart from the dividing line L1. The bearing arrangement line L3 may be an imaginary line extending in the radial direction, and the first support bearing B1 and the second support bearing B2 may be arranged on the bearing arrangement line L3.

In this case, there may be a rotation part arrangement line L2 between the dividing line L1 and the bearing arrangement line L3. The rotation part arrangement line L2 may be an imaginary extension line extending in the radial direction of the sun gear 340, and the sun gear 340, the ring gear RG, the pinion gears 370, the clutch 410, the stator 220, and the rotor 230 may be arranged on the rotation part arrangement line L2. In other words, the sun gear 340, the ring gear RG, the pinion gears 370, the clutch 410, the stator 220, and the rotor 230 may overlap each other radially.

Particularly, in this embodiment, the sun gear 340, the ring gear RG, the pinion gears 370, and the clutch 410 may overlap each other in the radial direction of the gear assembly 300 in the second area. Accordingly, an axial distance M1 from the rotor 230 to the dividing line L1 may be short. When the axial distance is short in this way, the drum rotating device 100 may be miniaturized, and conversely, the storage space S1 capacity of the drum 30 may be increased.

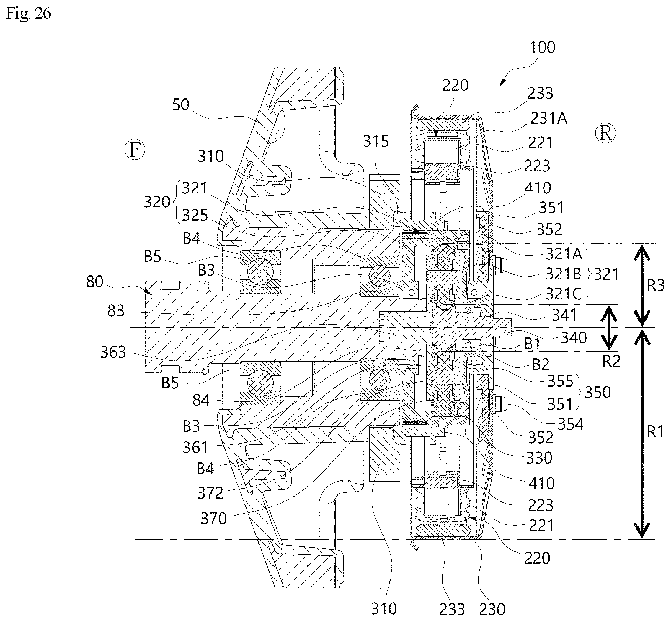

FIG. 26 shows a cross-sectional view showing the structure of the drum shaft 80 constituting the drum rotating device 100 and according to this embodiment. In FIG. 26, a radial distance R1 between the center of the rotation axis and the edge of the rotor 230, a radial distance R3 between the center of the rotation axis and the edge of the pinion gears 370 constituting the gear assembly 300, and the diameter R2 of the sun gear 340 are indicated.

As described above, in the present embodiment, the input shaft and the output shaft may be separated from each other and disposed in different areas. In this case, the diameter of the sun gear 340 may be reduced. More precisely, the diameter of the transmission gear part 343 of the sun gear 340 may be smaller than or equal to the diameter of the drum shaft 80. Since the sun gear 340 may omit a coupling structure for coupling with the drum shaft 80, the diameter of the sun gear 340 may be smaller than the diameter of the drum shaft 80.

With the miniaturization of the sun gear 340, not only the radial distance R3 to the pinion gears 370 but also the radial distance R1 to the edge of the rotor 230 may be reduced. Accordingly, the drum rotating device 100 of this embodiment may be reduced not only in axial length but also in radial length.

In FIG. 27, the diameter R2 of the sun gear 340 is compared with the diameter R4 of the drum shaft 80. As is seen, in this embodiment, the diameter R2 of the transmission gear part 343 of the sun gear 340 is smaller than the diameter R4 of the drum shaft 80. More precisely, the diameter R2 of the transmission gear part 343 of the sun gear 340 is smaller than the diameter R4 of the shaft coupling part 84 provided on the first end part of the drum shaft 80.

In this way, when the overall diameter of the gear assembly 300, including the sun gear 340, is reduced, the strength of the sun gear 340 may be increased. Additionally, the diameter of the motor 200 may also be reduced along with that of the sun gear 340. When the overall diameter of the entire drum rotating device 100 including the motor 200 is reduced in this way, the durability of the drum rotating device 100 may also be improved.

Specifically, when the overall diameter of the drum rotating device 100 is reduced, the size and number of fixing parts for supporting the motor 200 may also be reduced. Referring to FIG. 28, the structure of the stator 220 constituting the motor 200 is illustrated. The stator 220 may have the mounting holes 225a formed to support and fix the stator 220. Each of the mounting holes 225a may correspond to the motor support part 317 (see FIG. 9) provided on the supporter 310, and the motor support part 317 may be fitted into the mounting holes 225a. The mounting holes 225a may be arranged along the circumferential direction of the stator 220. In this embodiment, the mounting holes 225a may be spaced at intervals of 90° to 120° from each other. The strength of the drum rotating device 100 may increase as the diameter of the drum rotating device 100 decreases, and accordingly, even if the plurality of the mounting holes 225a is arranged at intervals of 90° to 120° from each other, the drum rotating device 100 including the motor 200 may have sufficiently high durability.

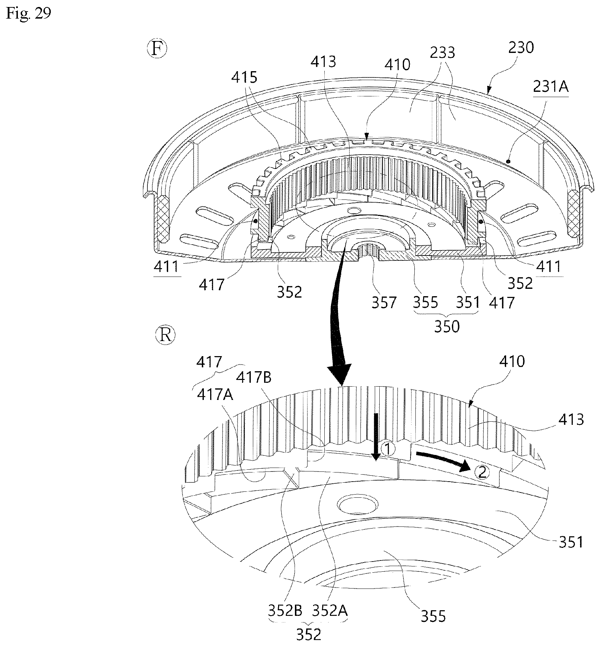

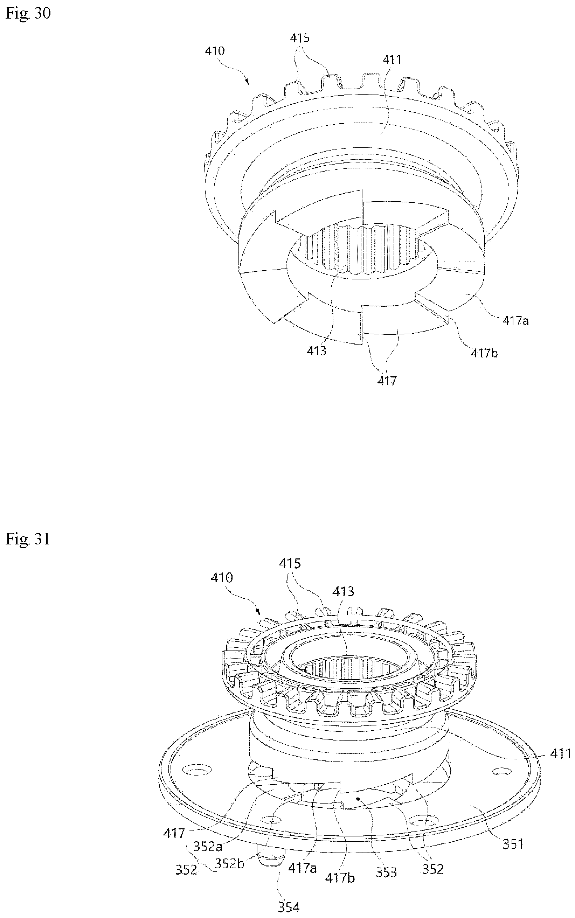

The structures of the clutch 410 and the clutch coupling part 351 will be described with reference to FIGS. 29, 30, 31, 32A, and 32B. For reference, in FIGS. 30, 31, 32A, and 32B, the clutch 410 is depicted smaller than the clutch 410 depicted in the preceding drawings to help the understanding of the structures. FIG. 29 shows a state immediately before the clutch 410 is coupled to the rotor 230. More precisely, FIG. 22 shows a state before the clutch gear 417 of the clutch 410 engages with the coupling gear 352 of the clutch coupling part 351. On the basis of the drawing, the clutch 410 moves up and down, and when the clutch 410 moves downward, the clutch gear 417 and the coupling gear 352 may be engaged with each other.

Looking at the enlarged portion below, the inner circumferential surface of the clutch gear 417 may be provided with the sliding teeth 413. The sliding teeth 413 may be engaged with the guide teeth 323 of the ring housing part 320 to allow the clutch 410 to be moved forward and backward along the guide teeth 323. The sliding teeth 413 may be considered as being disposed between the locking protrusions 415 and the clutch gear 417.

The clutch gear 417 may protrude from the surface of the clutch 410 toward the coupling gear 352, i.e., rearward. The clutch gear 417 may be provided continuously or discontinuously along the circumferential direction of the clutch 410 on the surface of the clutch 410. In this embodiment, the clutch gear 417 may be provided continuously along the circumferential direction of the clutch 410.

The clutch gear 417 may be provided on the opposite side of the locking protrusions 415. The locking protrusions 415 may be directed forward and the clutch gear 417 may be directed rearward. In a process in which the clutch 410 moves along the side surface of the ring housing part 320, the locking protrusions 415 may be held and fixed on the locking parts 315 of the supporter 310, or the clutch gear 417 may be engaged with the coupling gear 352 of the clutch coupling part 351. In addition, as described above, the clutch 410 may be spaced apart from the locking parts 315 and the coupling gear 352 and may have the neutral state.

Looking at the shape of the clutch gear 417, the clutch gear 417 may include a clutch inclined surface 417A and a clutch holding surface 417B. In the clutch gear 417, the surface of the clutch inclined surface 417A facing the coupling gear 352 may be formed to have a height increasing gradually along the circumferential direction. The clutch inclined surface 417A may have a shape corresponding to a coupling inclined surface 352A of the coupling gear 352. In this way, if the clutch inclined surface 417A has an inclined structure, when the clutch 410 moves rearward (in the direction of arrow ① in FIG. 29) and the clutch gear 417 and the coupling gear 352 are engaged with each other, the clutch inclined surface 417A and the coupling inclined surface 352A may naturally slide against each other, and the clutch 410 may be guided in a direction in which the clutch 410 is in close contact with the clutch coupling part 351.

More precisely, the clutch inclined surface 417A may be formed to be inclined downward in a direction (the direction of arrow ② in FIG. 29) in which the clutch gear 417 rotates in engagement with the coupling gear 352. Accordingly, when the clutch inclined surface 417A contacts the coupling inclined surface 352A, the clutch 410 may naturally slide in the rotational direction. In this embodiment, the clutch 410 may be engaged with the clutch coupling part 351 in the rotating state, not in a stationary state. Accordingly, the inclined structure of the clutch inclined surface 417A and the coupling inclined surface 352A may help the rotating clutch 410 to accurately engage with the clutch coupling part 351.

In contrast, the clutch holding surface 417B may have a steeper inclination angle than the clutch inclined surface 417A. The clutch holding surface 417B may be erected in a direction parallel to the moving direction of the clutch 410. For another example, the clutch holding surface 417B may have an inclination angle having a predetermined angle with respect to the moving direction of the clutch 410. The clutch holding surface 417B may have an inclination angle corresponding to a coupling holding surface 352B of the clutch coupling part 351.

The clutch holding surface 417B may be a portion on which external force is concentrated when the clutch 410 rotates together with the clutch coupling part 351. Accordingly, the clutch holding surface 417B may be required to support the engaged state of the clutch 410 and the clutch coupling part 351 so that the clutch 410 is prevented from disengaging from the clutch coupling part 351. To this end, the clutch holding surface 417B may be in surface contact with the coupling holding surface 352B of the clutch coupling part 351 so that the clutch holding surface 417B and the coupling holding surface 352B are mutually supported.

Referring to FIG. 30, the shape of the clutch gear 417 of the clutch 410 is shown. As is seen, the clutch holding surface 417B and the clutch inclined surface 417A may be arranged continuously along the circumferential direction on the surface of the clutch 410. The clutch holding surface 417B may be erected at the highest position of the clutch inclined surface 417A, and the clutch inclined surface 417A may start again from the lowest point of the clutch holding surface 417B. In addition, this shape may be repeated in the circumferential direction to form the clutch gear 417. As a result, the clutch gear 417 may have a structure in which opposite sides thereof are asymmetrical with respect to the axial direction. More precisely, the clutch gear 417 may be asymmetrical left and right with respect to a top land thereof. In addition, the coupling gear 352 may also be asymmetrical left and right with respect to a top land thereof.

Referring to FIG. 31, the coupling gear 352 of the clutch coupling part 351, which is engaged with the clutch gear 417, is shown together with the clutch gear 417. FIG. 31 shows a state before the clutch gear 417 engages with the coupling gear 352. As is seen, the clutch inclined surface 417A of the clutch gear 417 may face the coupling inclined surface 352A of the coupling gear 352. Even if the clutch inclined surface 417A does not correspond exactly to the coupling inclined surface 352A, the inclination angles of the two inclined surfaces may induce the clutch inclined surface 417A and the coupling inclined surface 352A to have precise positions relative to each other.

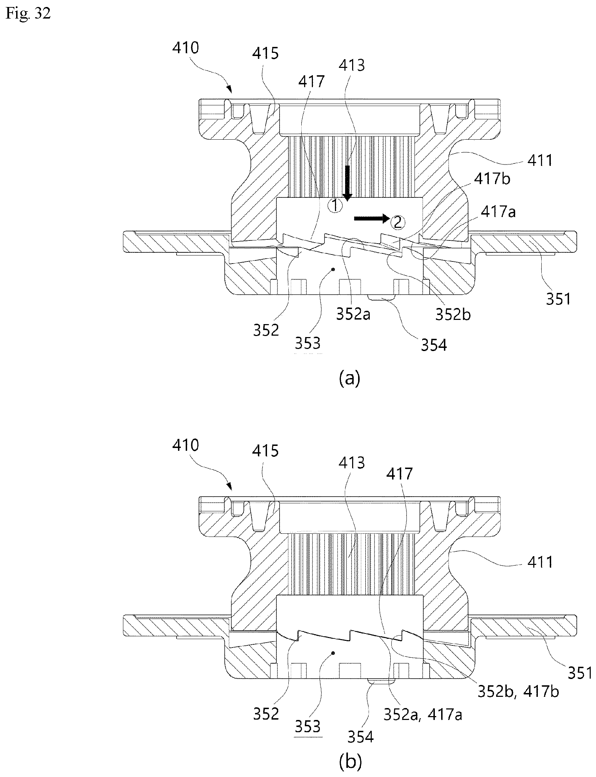

FIGS. 32A and 32B show a process in which the clutch 410 and the clutch coupling part 351 are coupled to each other. When the clutch 410 moves rearward (in the direction of arrow ① in FIG. 32A), the clutch inclined surface 417A of the clutch gear 417 and the coupling inclined surface 352A of the coupling gear 352 may be in contact with each other. In this case, the rotational speeds of the clutch 410 and the clutch coupling part 351 may be synchronized. The synchronization process has been described previously, so its explanation will be omitted. Of course, the rotational speeds of the clutch 410 and the clutch coupling part 351 may not be completely identical, but the clutch inclined surface 417A and the coupling inclined surface 352A may compensate for this.

When the clutch 410 continues to move rearward (downward on the basis of FIG. 32A) while the clutch inclined surface 417A of the clutch gear 417 and the coupling inclined surface 352A of the coupling gear 352 are in contact with each other, the clutch inclined surface 417A may slide in one direction (in the direction of arrow ②) on the coupling inclined surface 352A. This sliding direction may be the same as the direction in which the clutch 410 rotates together with the clutch coupling part 351 by being engaged therewith.

When the clutch inclined surface 417A slides on the coupling inclined surface 352A, a gap between the clutch 410 and the clutch coupling part 351 may decrease while the clutch 410 moves rearward. When the clutch 410 continues to move rearward while rotating (sliding), the clutch holding surface 417B may contact the coupling inclined surface 352A to be supported thereby. Finally, as shown in FIG. 32B, the clutch 410 and the clutch coupling part 351 are completely in close contact with each other. In this case, the clutch coupling part 351 and the clutch 410 may be rotated in the same direction and at the same speed even before the coupling, and may continue to be rotated together even after the coupling.

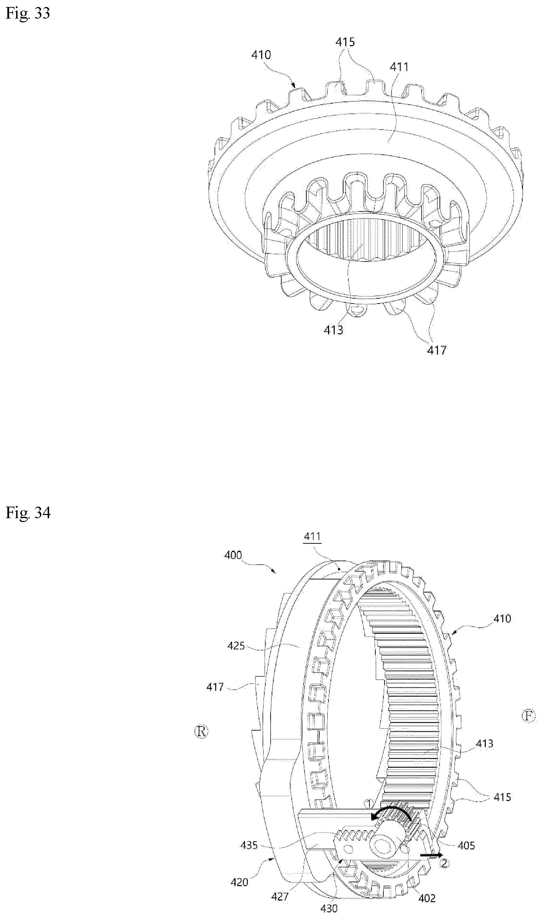

FIG. 33 illustrates another embodiment of the clutch 410. The description of a structure that is identical to the previous embodiment will be omitted. In this embodiment, the clutch gear 417 of the clutch 410 may have a structure in which opposite sides thereof are symmetrical with respect to an axial reference line. The clutch gear 417 may be formed to have a continuous uneven structure. The clutch gear 417 may be formed as a continuous curved surface.

Although not shown, the coupling gear 352 of the clutch coupling part 351 may also have an uneven and curved structure to correspond to the continuous uneven and curved structure of the clutch gear 417. In this case, when the curved surface of the clutch gear 417 and the curved surface of the coupling gear 352 are in contact with each other, the clutch gear 417 and the coupling gear 352 may be guided toward each other in directions in which the clutch gear 417 and the coupling gear 352 are engaged with each other.

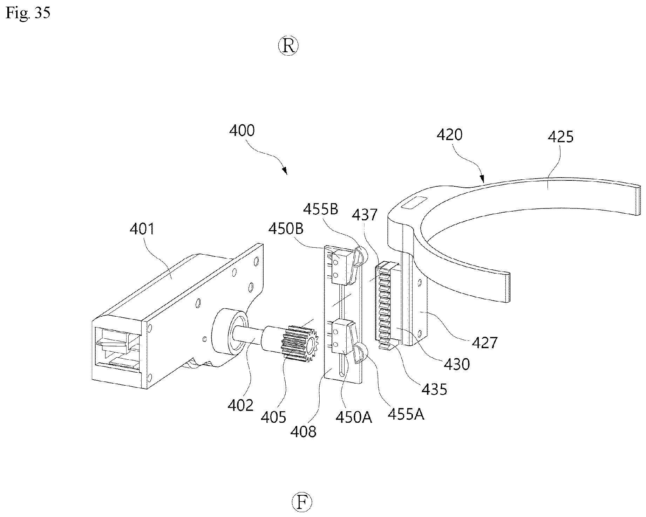

Next, the actuator 400 will be described with reference to FIGS. 34 and 35. The actuator 400 may drive the clutch 410. The actuator 400 may move the clutch 410 rectilinearly, thereby enabling transition between the washing mode, the initial spin-drying mode, the synchronization mode, and the spin-drying mode described above. The clutch 410 may also be considered as a part of the actuator 400.

The actuator 400 may include the clutch lever 420 and the drive module 401. FIG. 34 illustrates the clutch 410, the clutch lever 420, and the pinion part 405 of the drive module 401. FIG. 34 shows only the pinion part 405 of the drive module 401 to help understand the operations of the clutch 410 and the clutch lever 420. The rotational movement (in the direction of arrow ①) of the pinion part 405 may be converted into the rectilinear movement (in the direction of arrow ②) of the rack part 430 provided in the clutch lever 420, and the clutch lever 420 may be rectilinearly moved. When the clutch lever 420 moves rectilinearly, the clutch 410 may move rectilinearly in conjunction therewith. The clutch lever 420 may be considered as holding and moving the clutch 410.

Looking at the structure of the drive module 401 referring to FIG. 35, the drive module 401 may include the drive motor (not shown) that generates power and the internal gears (not shown) inside the drive module 401. A drive shaft 402 coupled to the coupling gear 352 may protrude from the drive module 401. The drive shaft 402 may be rotated in conjunction with the drive motor and the internal gears. Although not shown, the internal gears may include a worm and a worm gear to support the clutch 410 so that the clutch 410 does not move arbitrarily. As described above, the drive module 401 may be mounted on the tub 50.

The above drive shaft 402 may be provided with the pinion part 405. The pinion part 405 may be coupled to the drive shaft 402 and rotate together with the drive shaft 402. When the pinion part 405 rotates, the rack part 430 of the clutch lever 420, which is engaged with the pinion part 405, may move rectilinearly.

Looking at the structure of the clutch lever 420, the clutch lever 420 may include the lever arm 425, which is approximately in the shape of a pair of tongs. The lever arm 425 may be coupled to the lever coupling part 411 of the clutch 410. The lever arm 425 may implement holding the lever coupling part 411. In this embodiment, the lever arm 425 may be configured as a pair of lever arms, and the pair of lever arms 425 may be extended in an approximate arc shape. For another example, the lever arm 425 may be formed in a completely circular shape.

A lever frame 427 may extend from the clutch lever 420 above. The lever frame 427 may extend in forward and rearward directions, which are the driving directions of the clutch lever 420, that is, in upward and downward directions on the basis of FIG. 35. The lever frame 427 may be provided with the rack part 430. The rack part 430 may be engaged with the pinion part 405 to convert the rotational movement of the motor 200 provided in the actuator 400 into rectilinear movement. Reference numeral 435, which a gear part formed on the rack part 430, represents a part that is actually engaged with the pinion part 405. The rack part 430 may be provided integrally with the lever frame 427.

The clutch lever 420 may be provided with a sensor push part 437. The sensor push part 437 may be provided on the lever frame 427 or the rack part 430. The sensor push part 437 may limit the stroke of the clutch lever 420 by pressing an operation sensor 450A and 450B. When the sensor push part 437 presses one of a first sensor 450A and a second sensor 450B constituting the operation sensor 450A and 450B, the controller may identify the position of the clutch lever 420.

In a process in which the sensor push part 437 moves together with the clutch lever 420, the sensor push part 437 may interfere with and press a first switch 455A of the first sensor 450A or a second switch 455B of the second sensor 450B. Reference numeral 408 is a sensor frame 408 for fixing the operation sensor 450A and 450B, and the sensor frame 408 may be fixed to the supporter 310 (see FIG. 9).

The controller may cause the sensor push part 437 to move between a position at which the first sensor 450A is pressed (the locked state) and a position at which the second sensor 450B is pressed (the rotating state). In this case, the controller may also cause the sensor push part 437 to stop without pressing either the first sensor 450A or the second sensor 450B. That is, the controller may cause the sensor push part 437 to maintain the neutral state in which the sensor push part 437 is located between the first sensor 450A and the second sensor 450B. In the neutral state, the synchronization mode may be achieved.

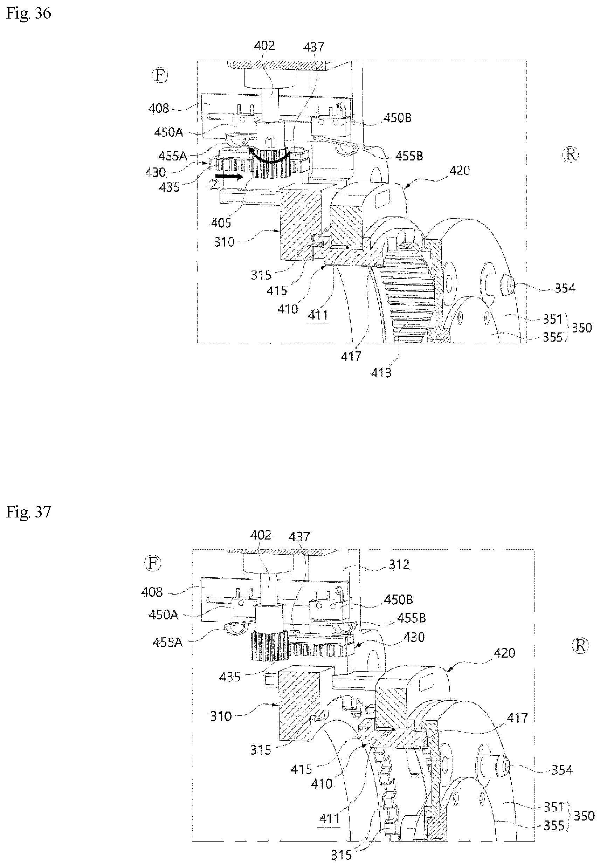

FIGS. 36 and 37 illustrate a process in which the clutch lever 420 moves the clutch 410. FIG. 36 illustrates the clutch 410 in the locked state. That is, the locking protrusions 415 of the clutch 410 may be held in the locking parts 315 of the supporter 310, so that the clutch 410 may not rotate. This may refer to the position of the clutch 410 when the drum rotating device 100 is in the washing mode or the initial spin-drying mode. In this case, the sensor push part 437 may be pressing the first switch 455A of the first sensor 450A. Accordingly, the controller may identify that the clutch 410 is in the locked state.

In this state, the clutch 410 may be moved so that the drum rotating device 100 is switched to the spin-drying mode. Looking at it in more detail, when the pinion part 405 of the actuator 400 rotates, the rack part 430, which is engaged with the pinion part 405, may move rectilinearly. Accordingly, the clutch lever 420 may move the clutch 410 rearward while the clutch lever 420 moves rectilinearly.

FIG. 37 shows a state in which the drum rotating device 100 has been switched to the spin-drying mode. The clutch 410 may move rearward, and the clutch gear 417 of the clutch 410 may be engaged with the coupling gear 352 of the clutch coupling part 351. Accordingly, the clutch 410 and the ring gear RG may rotate together with the clutch coupling part 351 and the rotor 230. In this case, the sensor push part 437 is pressing the second switch 455B of the second sensor 450B. Accordingly, the controller may identify that the clutch 410 is in the rotating state.

Meanwhile, in this embodiment, the actuator 400 may be composed of the rack part 430 and the pinion part 405, and thus may control the position of the clutch 410 precisely. That is, the controller may drive the actuator 400 to accurately position the clutch 410 in the locked state, the rotating state, as well as the neutral state. Furthermore, the actuator 400, which is composed of the rack part 430 and the pinion part 405, may be prevented from being pushed by an external force, so that the displacement of the clutch 410 may be restricted.

When the motor 200 is decelerated while the clutch gear 417 is engaged with the coupling gear 352, the clutch holding surface 417B and the coupling holding surface 352B may move apart from each other, and the clutch inclined surface 417A may be moved up in a direction in which the clutch inclined surface 417A is separated from the coupling inclined surface 352A. In this case, there is a risk that the clutch 410 may idle as the coupling between the clutch 410 and the clutch coupling part 351 is released. However, in this embodiment, since the rack part 430 and the pinion part 405 are engaged with each other, this phenomenon may be prevented. Accordingly, noise and vibration caused by repeated disengagement and engagement between the clutch 410 and the clutch coupling part 351 in the reduction section of the motor 200 may be prevented. As a result, as shown in FIG. 24, the present disclosure may achieve a noise reduction result compared to the existing drum rotating device 100.

The above explanation is merely an exemplary description of the technical idea of the present disclosure, and those skilled in the art to which the present disclosure belongs may make various modifications and variations without departing from the essential characteristics of the present disclosure. Accordingly, the embodiments disclosed in the present disclosure are intended to explain rather than limit the technical idea of the present disclosure, and the scope of the technical idea of the present disclosure is not limited by these embodiments. The scope of protection of the present disclosure should be interpreted by the claims below, and all technical ideas within the equivalent scope should be interpreted as being included in the scope of the claims of the present disclosure.

## Claims

1. A drum rotating device for laundry care apparatus comprising:

    a drum shaft (80) coupled to a drum (30);
    a motor (200) comprising a stator (220) and a rotor (230) that rotates relative to the stator (220);
    a gear assembly that transmits rotational force of the rotor (230) to the drum shaft (80); and
    a clutch (410) that moves in an axial direction of the drum shaft (80) and adjusts shifting of the gear assembly,
    wherein the gear assembly comprises:

        a sun gear (340) connected to the rotor (230);
        a carrier (360) that is connected to the drum shaft (80) and rotates together with the drum shaft (80);
        a ring gear (RG) that surrounds the sun gear (340) and is engaged with the clutch (410) to rotate together with the clutch (410); and
        a plurality of pinion gears (370) that is engaged with each of the sun gear (340) and the ring gear (RG) and is rotatably supported by the carrier (360),
        wherein the carrier (360) and the drum shaft (80) are coupled to each other in a first area, and
        wherein the sun gear (340), the ring gear (RG) and the pinion gears (370) are engaged with each other and rotate in a second area spaced apart from the first area on the basis of the axial direction.

2. The drum rotating device for laundry care apparatus of claim 1, wherein the sun gear (340) and the drum shaft (80) are spaced apart from each other in the axial direction of the drum shaft (80).

3. The drum rotating device for laundry care apparatus of claim 1 or 2, wherein a movement section of the clutch (410) is distributed between the first area and the second area.

4. The drum rotating device for laundry care apparatus of any one of claims 1 to 3, wherein the sun gear (340) and the drum shaft (80) are disposed on opposite sides of the carrier (360) with the carrier (360) placed therebetween.

5. The drum rotating device for laundry care apparatus of any one of claims 1 to 4, wherein the carrier (360) is provided with an output part (363) coupled to the drum shaft (80), and
the output part (363) and the sun gear (340) protrude in opposite directions along the axial direction.

6. The drum rotating device for laundry care apparatus of any one of claims 1 to 5, wherein the sun gear (340), the ring gear (RG), the pinion gears (370), the clutch (410), the stator (220), and the rotor (230) are arranged to overlap each other in a radial direction of the gear assembly.

7. The drum rotating device for laundry care apparatus of any one of claims 1 to 6, wherein the sun gear (340), the ring gear (RG), the pinion gears (370), and the clutch (410) overlap each other in a radial direction of the gear assembly in the second area.

8. The drum rotating device for laundry care apparatus of any one of claims 1 to 7, wherein the rotor (230) is provided with a coupling unit (350) that is coupled to the sun gear (340) and rotates together with the sun gear (340), and
a portion of the ring gear (RG) is disposed between the coupling unit (350) and the sun gear (340) on the basis of a radial direction of the sun gear (340).

9. The drum rotating device for laundry care apparatus of claim 8, wherein a first support bearing (B1) is disposed between an inner circumferential surface of a portion of the ring gear (RG) and the sun gear (340),

a second support bearing (B2) is disposed between an outer circumferential surface of a portion of the ring gear (RG) and the coupling unit (350), and
the first support bearing (B1) and the second support bearing (B2) are disposed to overlap each other along the radial direction of the sun gear (340).

10. The drum rotating device for laundry care apparatus of any one of claims 1 to 9, wherein the rotor (230) is provided with a coupling unit (350) that is coupled to the rotor (230) and rotates together with the rotor (230), wherein the coupling unit (350) comprises:

a clutch coupling part (351) that is engaged with the clutch (410) and rotates the clutch (410); and
a sun gear coupling part (355) that is coupled to the clutch coupling part (351) to rotate together with the clutch coupling part (351) and is coupled to the sun gear (340).

11. The drum rotating device for laundry care apparatus of any one of claims 1 to 10, wherein the clutch (410) moves relative to the ring gear (RG) along the axial direction while the clutch (410) is engaged with the ring gear (RG).

12. The drum rotating device for laundry care apparatus of any one of claims 1 to 11, wherein one end of the drum shaft (80) is provided with a shaft coupling part (84) coupled to an output part (363) of the carrier (360), and wherein a diameter of the sun gear (340) is smaller than a diameter of the shaft coupling part (84).

13. The drum rotating device for laundry care apparatus of any one of claims 1 to 12, wherein a supporter (310) is disposed at a position spaced apart from the rotor (230) along the axial direction, wherein the clutch (410) comprises:

a locked state in which the clutch (410) is connected to the supporter (310) and is stopped from rotating;
a rotating state in which the clutch (410) is connected to the rotor (230) and rotates together with the rotor (230); and
a neutral state in which the clutch (410) is spaced apart from the supporter (310) and the rotor (230).

14. The drum rotating device for laundry care apparatus of claim 13, wherein the clutch (410) transitions from the locked state to the rotating state through the neutral state, and

in the neutral state, a synchronization mode in which a rotational speed of the clutch (410) is synchronized with a rotational speed of the rotor (230) is implemented,
wherein the synchronization mode comprises:

a first synchronization mode in which the rotor (230) rotates without shifting, and the clutch (410) moves to transition from the locked state to the neutral state; and
a second synchronization mode in which the rotor (230) is decelerated and the clutch (410) is accelerated by the deceleration of the rotor (230).

15. The drum rotating device for laundry care apparatus of claim 14, wherein when the speeds of the clutch (410) and the rotor (230) are synchronized through the second synchronization mode, the clutch (410) moves toward the rotor (230) and is coupled to a coupling unit (350) of the rotor (230).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Rotational
speed
(rpm)

400 ○

100

0 ○

Sun gear          Carrier          Ring gear
(input shaft)  (output shaft(drum))  (clutch)

Fig. 19

Rotational
speed
(rpm)

400

100 ○          ○          ○

0

Sun gear          Carrier          Ring gear
(input shaft)  (output shaft(drum))  (clutch)

Fig. 20

Speed(rpm)
500

400          Motor

300

200

100          Drum          Clutch

Clutch
position

1

2

3

T1  T2          T3  T4          Time(S)

Fig. 21

Fig. 22

Fig. 23

Fig. 24

............. : Prior atr
────── : Present disclosure

Fig. 25

Fig. 26

Fig. 27

Fig. 28

Fig. 29

Fig. 30

Fig. 31

Fig. 32

(a)

(b)

Fig. 33

Fig. 34

Fig. 35

Fig. 36

Fig. 37

| | Europäisches Patentamt European Patent Office Office européen des brevets | **EUROPEAN SEARCH REPORT** | **Application Number** EP 25 17 0418 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/232143 A1 (SONODA YASUYUKI [JP] ET AL) 23 July 2020 (2020-07-23) | 1,3-7, 10,11 | INV. D06F37/36 |
| A | * paragraph [0135] - paragraph [0178]; claims; figures * | 2,8,9, 12-15 | ADD. D06F37/40 |
| | ----- | | |
| X | US 2019/390391 A1 (JANG JEONG CHEOL [KR] ET AL) 26 December 2019 (2019-12-26) | 1,3-7 | |
| A | * paragraph [0050] - paragraph [0076]; claims; figures * | 2,8-15 | |
| | ----- | | |
| X | KR 2024 0056159 A (LG ELECTRONICS INC [KR]) 30 April 2024 (2024-04-30) | 1,2,4-7, 10,13 | |
| Y | * paragraph [0158] - paragraph [0241]; | 8,9 | |
| A | figures * | 3,11,12, 14,15 | |
| | ----- | | |
| Y | EP 4 357 510 A1 (LG ELECTRONICS INC [KR]) 24 April 2024 (2024-04-24) * figures * | 8,9 | |
| | ----- | | |

**TECHNICAL FIELDS SEARCHED (IPC)**

D06F

The present search report has been drawn up for all claims

| Place of search | Date of completion of the search | Examiner |
|---|---|---|
| Munich | 16 September 2025 | Popara, Velimir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 650 507 A1

ANNEX TO THE EUROPEAN SEARCH REPORT
ON EUROPEAN PATENT APPLICATION NO.

EP 25 17 0418

This annex lists the patent family members relating to the patent documents cited in  the above-mentioned European search report.
The members are as contained in the European Patent Office EDP file on
The European Patent Office is in no way liable for these particulars which are merely given for the purpose of information.

16-09-2025

| Patent document cited in search report | Publication date | Patent family member(s) | | Publication date |
|---|---|---|---|---|
| US 2020232143 A1 | 23-07-2020 | EP | 3877581 A1 | 15-09-2021 |
| | | US | 2020232143 A1 | 23-07-2020 |
| | | WO | 2020149672 A1 | 23-07-2020 |
| US 2019390391 A1 | 26-12-2019 | KR | 101885203 B1 | 03-08-2018 |
| | | US | 2019390391 A1 | 26-12-2019 |
| | | US | 2020010998 A1 | 09-01-2020 |
| | | WO | 2018208003 A1 | 15-11-2018 |
| KR 20240056159 A | 30-04-2024 | EP | 4357512 A1 | 24-04-2024 |
| | | KR | 20240056159 A | 30-04-2024 |
| | | US | 2024133105 A1 | 25-04-2024 |
| EP 4357510 A1 | 24-04-2024 | EP | 4357510 A1 | 24-04-2024 |
| | | KR | 20240056148 A | 30-04-2024 |
| | | US | 2024133106 A1 | 25-04-2024 |

EPO FORM P0459

For more details about this annex : see Official Journal of the European Patent Office, No. 12/82

**EP 4 650 507 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240064679
- KR 1020200089604
- KR 1020230090484
- KR 101920812